# EUROPEAN PATENT SPECIFICATION

(11) **EP 0 753 844 B1**
(45) Date of publication and mention of the grant of the patent: **15.05.2002**
(21) Application number: 96111087.1
(22) Date of filing: 10.07.1996
(51) Int. Cl.: G11B 7/00, G11B 7/12, G11B 17/00, G11B 17/04

(54) **Optical memory apparatus**
Optisches Speichergerät
Appareil de mémorisation optique

(30) Priority: 10.07.1995 JP 17365295; 24.05.1996 JP 13017096
(43) Date of publication of application: 15.01.1997
(60) Divisional application: 00110506.3
(73) Proprietor: FUJITSU LIMITED, Kawasaki-shi, Kanagawa 211-8588 (JP)
(72) Inventor: Saitou, Hidenori, c/o Fujitsu Limited, Kawasaki-shi, Kanagawa 211 (JP); Iwamoto, Toshitaka, c/o Fujitsu Limited, Kawasaki-shi, Kanagawa 211 (JP); Ukai, Hirataka, c/o Fujitsu Limited, Kawasaki-shi, Kanagawa 211 (JP); Kunimatsu, Yasukiyo, c/o Fujitsu Limited, Kawasaki-shi, Kanagawa 211 (JP); Juman, Shigeru, c/o Fujitsu Limited, Kawasaki-shi, Kanagawa 211 (JP); Sukagawa, Tomoo, c/o Yamagata Fujitsu Limited, Ohaza, Higashine-shi, Yamagata 999-37 (JP); Sasaki, Masateru, c/o Fujitsu Limited, Kawasaki-shi, Kanagawa 211 (JP); Nagasaki, Tatsutoshi, c/o Fujitsu Limited, Kawasaki-shi, Kanagawa 211 (JP); Uchiyama, Masao, c/o Yamagata Fujitsu Limited, Ohaza, Higashine-shi, Yamagata 999-37 (JP)
(74) Representative: Seeger, Wolfgang, Dipl.-Phys.

(56) References cited:
- EP-A- 0 439 286
- EP-A- 0 475 673
- EP-A- 0 526 703
- US-A- 5 146 447
- US-A- 5 220 543
- US-A- 5 386 407
- US-A- 5 420 832
- PATENT ABSTRACTS OF JAPAN vol. 008, no. 068 (P-264), 30 March 1984 & JP 58 215739 A (HITACHI SEISAKUSHO KK), 15 December 1983,
- PATENT ABSTRACTS OF JAPAN vol. 018, no. 638 (P-1837), 5 December 1994 & JP 06 243654 A (SONY CORP), 2 September 1994,
- PATENT ABSTRACTS OF JAPAN vol. 015, no. 503 (P-1290), 19 December 1991 & JP 03 216885 A (SONY CORP), 24 September 1991,
- PATENT ABSTRACTS OF JAPAN vol. 095, no. 004, 31 May 1995 & JP 07 029362 A (NEC GUMMA LTD), 31 January 1995,
- PATENT ABSTRACTS OF JAPAN vol. 016, no. 527 (P-1447), 29 October 1992 & JP 04 195963 A (SONY CORP), 15 July 1992,
- PATENT ABSTRACTS OF JAPAN vol. 018, no. 494 (P-1800), 14 September 1994 & JP 06 162753 A (RICOH CO LTD), 10 June 1994,

## Description

### Technical Field to which the invention belongs

The present invention relates in generally to an optical memory apparatus and more particularly to an optical memory apparatus which receives and reads data from an optical memory medium, with an optical head having a fixed optical part and a movable optical part, a base, a carriage movably mounted on said base and carrying said movable optical partand a light emitter mounted on said base.

Such an optical disc is known from US-A-5 220 543 on which the preamble of claim 1 is based.

Attention is being focused on an optical disc as a recording medium which been established as the core of multimedia showing rapid development in these years. This optical disc is usually accommodated in a portable cartridge.

An optical disc cartridge is loaded into an optical disc apparatus and the optical disc is accessed by an optical head for reproduction of information.

An optical disk apparatus is used currently under the condition that it is externally connected with a computer via the SCSI interface. Moreover, the 3.5-inch optical disc apparatus unit taken out of an external locker is a type of 1-inch height having the external size of about 25.4 mm (height) x 101.6 mm (width) x 150 mm (depth) (an accuracy error of about ± 0.5 mm may be added) and a weight of about 470g. When the disc is accommodated within the external locker is the external size is 36 mm (height) x 132 mm (width) x 208 mm(depth).

Therefore, such optical memory apparatus can be applied only to a desk-top type personal computer and it has been impossible, from the viewpoint of size and weight, to incorporate the apparatus, simply by inserting it, into portable type personal computers which is now quickly propagated.

In view of improving operationability for user, it is strongly required to introduce an optical disk apparatus into a portable personal computer.

It is an object of the present invention to provide an optical memory apparatus with reduced thickness.

This object has been solved by the features of claim 1.

One important advantage of the invention lies in the fact that optical parts can be arranged directly in fixed relation to the drive base by providing a block in contact with the optical parts to improve the fitting surface accuracy.

Moreover, as described in the Japanese Patent Laid-Open No. 210878/1995, a fixed optical head base which has been provided in separation from the conventional drive base can be eliminated. According to the invention the fixed optical unit can be designed almost in the same size as the optical parts, thereby enabling reduction in thickness of apparatus and weight through reduction in the number of parts.

In addition, a thinner drive base permits reduction in the thickness of the apparatus by arranging taller light emitting element and photodetector to the edge portion of the drive base where taller parts are not arranged.

Therefore, a drive base having the height almost same as the thickness of cartridge can be realized by providing a recess used as a fixed optical head base (fixed optical unit) to the drive base at the outside of the cartridge accommodation space, height of the fixed optical unit can be set within the range of the height of the drive base and thereby thinner and smaller apparatus can be designed.

Moreover, as is described in the Japanese Patent Laid-Open No. 210878/1995, a fixed optical head base which has been provided in separation from the conventional drive base can be eliminated the fixed optical unit can be designed almost in the same size as the optical parts, thereby enabling reduction in thickness of apparatus and weight through reduction in the number of parts.

Further, optical parts can be arranged in direct on the drive base by improving the optical parts fitting surface accuracy through provision of the block.

In addition, since a light emitting element and a photodetector are provided utilizing the external part of the recess, where taller parts are not arranged, at the outside of the cartridge holder accommodating part, the light emitting element and photodetector can be projected toward the lower surface side of the recess, not depending on the height of recess and moreover the recess can be formed in the minimum thickness and size to realize reduction in thickness and size of the apparatus.

A shield cover for shielding the light beam is characteristically provided at the upper surface of the recess of the drive base.

Therefore, optical parts which are rather weak to dusts can be protected by shielding the light beams at the inside and outside of the fixed optical unit and sealing the fixed optical unit to prevent inflow of dusts.

The base can have an external side wall at an edge of the base, the external side wall defining the recess and having a first slit and a second slit and the light emitter is mounted in the first slit, and said photo-detector is mounted in the second slit.

Therefore, since slits are provided at the part used as the optical path and block is also provided in the part for arranging optical parts in order to obtain the positional accuracy, the fixed optical head base can be formed on the drive base and highly accurate optical parts can also be arranged, enabling direct arrangement of the optical parts on the drive base.

Accordingly, the driver base can be formed in the minimum thickness and size to realize reduction in thickness and size of the apparatus.

An optical memory apparatus characterized in comprising drive base having the reference surface on which at least a turn-table unit holding a turn-table to rotatably drive an optical memory medium is mounted and a recess which is formed by projections at both sides of said reference surface, whereby a motor which is constituted by a flat type box unit is arranged in the recess.

Therefore, since the motor accommodating space is obtained by forming a recess on the drive base, it is now possible to utilize a vacant space at the lower surface side of the reference plane of the drive base, enabling reduction in thickness and size of the drive base, without excessively requiring height of the eject motor at the upper surface side of the reference plane of the drive base. In addition, employment of the motor formed by the flat type box unit realizes thinner and smaller drive base, resulting in reduction in thickness and size of the apparatus.

An optical memory apparatus characterized in comprising cartridge holder to which a cartridge for accommodating optical memory medium is inserted, eject motor to drive the cartridge to be exhausted, drive base mounting the cartridge holder and having first and second accommodating means formed as the recesses with the projections from both sides of the cartridge holder mounting surface outside the area to which the cartridge is accommodated, block formed at a part of the internal wall of the first accommodating means, fixed optical unit mounting a light emitting element for emitting the light beam and a photodetector for detecting the light beam returning from the memory medium at the external circumference of the first accommodating means and arranging at least a part of optical parts for guiding the light beam in contact with the surface of the block at the inside of the first accommodating means for positioning of the optical part, and eject motor unit arranging the eject motor into the second accommodating means.

Therefore, since the fixed optical unit and eject motor accommodating space is reserved by forming a recess on the drive base, it is no longer required to reserve the height of the fixed optical unit and eject motor at the upper surface side of the drive base by providing them to the drive base at the outside of the cartridge accommodating space (cartridge holder accommodating part) and these can also be accommodated within the height of the drive base, enabling reduction in thickness of the drive base at the upper surface side of the cartridge holder.

The eject motor is characteristically constituted by a flat type box unit.

Moreover, employment of an eject motor constituted by a flat type box unit realizes reduction in thickness of the drive base, enabling reduction in thickness and size of the apparatus.

An optical memory apparatus characterized in comprising a fixed optical unit at least provided with movable optical unit mounting an objective lens to move the objective lens in the radius direction of optical memory medium, light emitting element arranged to emit the light in the orthogonal direction with respect to the moving direction of the movable optical unit, first optical parts for refracting the light beam from the light emitting element to guide the light beam to the movable optical unit and also refracting the light beam returning from the optical memory medium to guide the light beam in the orthogonal direction, second optical parts for guiding the light beam returning from the optical memory medium by separating the light beam into the reproduced signal element and servo signal element, first photo detector for detecting a reproduced signal by receiving the light beam of the reproduced signal element, and second photodetector for detecting the servo signal by receiving the light beam of the servo signal element.

Therefore, since the shortest optical path can be laid by arranging the fixed optical unit as explained above, the optical parts can be simplified and reduced in size in order to minimize accommodation volume of optical units of the fixed optical unit to reduce thickness and size of the apparatus.

The fixed optical unit is characterized in providing a recessed head base formed with the external sides, at the part for accommodating the cartridge of the optical memory medium, projected toward the surface of the cartridge accommodating means, arranging in direct the light emitting element, the first photodetector and the second photodetector at the external circumference of the recessed area and also arranging in direct at least the first optical parts, the second optical parts within the recessed area.

Therefore, the thinner upper surface side of the cartridge accommodating part of the drive base can be formed to realize reduction in thickness and size of the apparatus by arranging in direct the optical parts of the fixed optical unit to the drive base at the outside of the cartridge accommodating part through formation of the recess utilizing a vacant space in the surface side of the cartridge accommodating part.

The first optical parts is constituted by a beam splitter and reflector prism, while said second optical parts is constituted by a beam splitter and Wollaston prism.

Therefore, the optical parts of the fixed optical unit can be formed in small size to lay short optical path and reduce the accommodation volume thereof, enabling reduction in thickness and size of the apparatus.

A servo unit for isolating the servo signal into a plurality of signal elements is provided and the second photodetector detects a focus signal and a track signal from the multiple signal elements.

Therefore, use of servo unit enables extraction of a couple of signals without utilizing a plurality of photodetectors and thereby the optical parts can be formed in small size to lay short optical path and accommodating volume of the optical parts of the fixed optical unit can be reduced to realize reduction in thickness and size of the apparatus.

An optical memory apparatus characterized in comprising a turn-table unit having a turn-table for rotatably driving an optical memory medium and a metal plate for mounting the turntable.

Therefore, a thinner turn-table accommodating means of the drive base can be formed to reduce thickness and size of the apparatus by minimizing thickness of the member to hold the turn-table and approximating as much as possible the total height of the turn-table unit to the height of the turn-table. In addition, the turn-table can be held with a metal plate with the simplified process and manufacturing cost can also be reduced by saving the number of parts and man-hours.

An optical memory apparatus characterized in comprising cartridge holder to which a cartridge accommodating an optical memory medium is inserted, turn-table unit consisting of a turn-table for rotatably driving the optical memory medium and a metal plate having a slide portion and holding the turn-table, load mechanism having a load plate including a guide having the sloped surface end moving upward/downward the turn-table by causing the load plate to slide, followed by sliding of the slide portion on the sloped surface of the guide, and drive base mounting the cartridge holder at the lower surface side and the turn-table unit, the load mechanism at the upper surface side of the cartridge holder so that the slide portion and the guide are engaged therewith.

Therefore, height of the drive base in the upper surface side of the cartridge holder accommodating means can be limited only to the height of the mechanism for loading/unloading the turn-table unit, thereby front surface of the apparatus can be formed as thinner as possible and height of the apparatus can be approximated as close as possible to the thickness of cartridge.

Accordingly, the optical memory apparatus can be inserted into the unit of about 17 mm high of the host system to use as the built-in type optical memory apparatus.

Furthermore, mount of upward movement of the turn-table unit as a whole is controlled by forming the member to hold the turn-table as thinner as possible and approximating the total height of the turn-table unit to the height of the turn-table, and thereby height of the turn-table unit accommodating means can be decreased to reduce the side and thickness of the apparatus.

The metal plate of the turn-table unit is integrally formed with said slide portion by the press technique.

Therefore, thickness of apparatus can be reduced as much as possible and reduction in size and weight thereof can also be realized without requiring complicated holding member to hold the slide portion. In addition, a drive torque (drive torque of eject motor) of the load mechanism can be alleviated by minimizing amount of upward movement of the turn-table unit as a whole and reducing as much as possible the weight of the member held by the turn-table unit. Furthermore, complicated shape can be simplified using the press technique, thus enabling reduction in cost by saving the number of parts and man-hours.

At least a flexible printed wiring sheet for guiding a signal lead to rotatably drive the turn-table is mounted on the metal plate.

Amount of upward movement of the turn-table unit as a whole can be controlled by making thinner as much as possible the member held by the turn-table unit and approximating the total height of the turn-table unit to the height of only the turntable. Thereby, a thinner turn-table unit accommodating means of the drive base can be formed to realize thinner apparatus. Moreover, the drive torque (drive torque of eject motor) of the load mechanism can be alleviated by minimizing amount of upward movement of the turn-table unit and reducing as much as possible the weight of the member held by the turn-table unit.

A lock mechanism is further provided on said load plate and rotates in conjunction with the load mechanism to lock, when said cartridge is not inserted, a lens carriage mounting the objective lens not to move and to unlock, when the cartridge is inserted, the lens carriage to move.

Therefore, when the cartridge is not inserted, that is, the apparatus is not used, movement of lens carriage by gravity and artificial influence can be prevented to improve durability and reliability of the apparatus.

An optical memory apparatus characterized in comprising a drive base arranging at least a mechanism for making access to an optical memory medium and a cover for covering at least one surface of the drive base, whereby the cover is provided with a bending portion which is bent to cover the external circumferencial edge of the drive base.

Therefore, introduction of almost labyrinth structure into the external circumference of the apparatus prevents inflow of dusts into the apparatus and also improves durability and reliability of the apparatus. In addition, since strength can be assured with the bending portion even with use of a thinner cover, durability can also be improved.

An optical memory apparatus characterized in comprising cartridge holder to which a cartridge accommodating optical memory medium is inserted, drive base mounting at least the cartridge holder, and printed circuit board mounting circuit parts for making access to the optical memory medium and covering the drive base through the cartridge holder, whereby the printed circuit board arranges taller circuit parts at the outside of the cartridge in opposition thereto.

Therefore, since the taller part of the printed circuit board is not arranged at the position opposed to the cartridge accommodating means by utilizing the height of the cartridge accommodating means, the lower side of the drive base is set to about the thickness of the cartridge to realize reduction in thickness of the apparatus.

The printed circuit board mounts the circuit parts only at single side thereof with the mounting surface provided opposed to the drive base.

Therefore, the surface of the printed circuit board can be flattened and the optical memory apparatus can be built smoothly into the host system.

The printed circuit board is provided with a connector for E-IDE interface.

Therefore, connectability of the host system to the interface connector can be improved and it can be connected easily to the host system by adding a simplified function to the external case.

An optical memory apparatus characterized in comprising cartridge holder to which a cartridge accommodating optical memory medium is inserted and an eject mechanism which is provided in the cartridge holder to eject the cartridge to outside of the apparatus, whereby the eject mechanism comprises a roller to be engaged with the cartridge and a spring portion for energizing the roller in the cartridge exhausting direction and the roller is consisting of a metallic rotating shaft and a rotating part made of a material having sliding property.

Therefore, breakdown of the roller due to erroneous insertion of the cartridge can be prevented and durability and reliability of apparatus can also be improved without remarkable change of weight and structure of the apparatus.

An optical memory apparatus characterized in comprising drive base arranging, at both upper and lower surfaces thereof, at least one mechanism for making access to a 3.5-inch optical memory medium accommodated in a cartridge, cartridge holder to be arranged at the lower surface side of the drive base to insert the cartridge, turn-table unit for projecting the turntable to rotatably drive the optical memory medium toward the cartridge holder side via a first aperture formed on the drive base provided opposed to the cartridge holder and holding the turn-table at the upper surface side of the drive base, moving optical unit for holding an objective lens to move the objective lens within a second aperture of the drive base formed in the radius direction of the optical memory medium, fixed optical unit having, in the first mounting part of the drive base at the outside of the part where said cartridge is accommodated, at least light emitting element for emitting light beam, photodetector for detecting light beam returning from the optical memory medium, optical parts for guiding the light beam and block allowing at least a part of the optical parts to be in contact therewith for the positioning of the optical parts, eject motor arranged at second mounting part of the drive base at the outside of the part where the cartridge is accommodated for driving to eject the cartridge, cover for covering one surface side of the driver base, printed circuit board for covering the other surface side of the driver base and mounting circuit parts for making access to the optical memory medium, whereby the height from the upper most surface to the lower most surface under the condition that the cover and printed circuit board are engaged with the driver base is set to the height for accommodating the unit of 17 mm high of the host system.

Therefore, with employment of the structure described above, the parts mounted on the drive base can be simplified and reduced in size, thickness and weight, moreover the drive base itself can be reduced in thickness and weight, thereby total weight of the optical memory apparatus can be reduced, the apparatus as a whole can be reduced in thickness and weight, the apparatus, if it is the optical. memory apparatus for processing a cartridge type optical memory medium such as the 3.5-inch magneto-optical disc cartridge conforming to the ISO standards, may be accommodated into the slot such as the floppy disc unit of 17 mm high of the host system, and it can also be carried by mounting into the ultra-thinner portable personal computer.

An optical memory apparatus characterized in comprising case for covering the outer most circumferencial part of the drive base under the condition that the cover and printed circuit board are engaged therewith, first connector connected with an interface connector at the position within the case provided opposed to the interface connector provided on the printed circuit board, converting circuit for converting information of the interface connector transmitted from the first connector into the other interface information, and second connector opposed and provided at the outside of the case to transmit information from the converting circuit to the outside.

Therefqre, an optical memory apparatus can be easily connected with many host systems only by connecting the optical memory apparatus having only one kind of interface connector to the case corresponding to the interface of the host system, thereby improving flexibility of a unit of the optical memory apparatus.

The interface connector is an E-IDE interface. Therefore, connection to many host system can be done easily to improve flexibility of a unit of the optical memory apparatus.

The other interface is the SCSI interface or PCMCIA interface.

Therefore, scope of selection for the host system can be widened in accordance with the application of the optical memory apparatus to expand the flexibility. Moreover, connection to the host system of SCSI and PCMCIA can be realized easily, assuring easy connection to the popular host systems.

An optical memory apparatus characterized in comprising front bezel having a door for inserting and exhausting a cartridge in which optical memory medium is accommodated, cartridge holder in which the cartridge inserted through the door is accommodated, turn-table unit having a turn-table for rotatably driving the optical memory medium and a sliding part to hold the turn-table, load mechanism providing the load plate having a guide including the sloped surface for moving upward/downward the turn-table when the sliding part slides on the sloped surface of the guide while the load plate slides, drive base mounting the front bezel at the side surface thereof, the cartridge holder at the lower surface side thereof and mounting the turn-table unit and the load mechanism at the upper surface side of the cartridge so that the slide part and the guide are engaged with each other, erected wall piece provided on the load plate, manual eject hole provided on the front bezel or the drive base provided at the position opposed to the erected wall piece, and cover freely opening or closing the manual eject hole.

The cover is made of a seal member on which the centre area is radially cut to form a slit.

Therefore, while the above-mentioned reliability is assured, mounting can be done with simplified procedures without allowing projection in the height and width directions of the apparatus.

The cover is constituted by rubber to clog the manual eject hole and a spring member to hold the rubber and to be energized toward the manual eject hole.

Therefore, sufficient strength of the cover can be assured with simplified structure and the manual eject hole can be covered reliably even if insertion of manual eject pin is repeated and thereby hermetically sealing of the apparatus can be improved, resulting in improvement in reliability and durability of the apparatus.

The invention permits the construction of magneto-optical disc apparatusses and phase variable type optical disc apparatus with reduced height of e.g. about 24 mm or less and of reduced weight of e.g. 300g or less. The optical memory apparatus can be designed almost in the same size as the floppy disc apparatus of about 17 mm thickness and can also be inserted into existing floppy disk units (slots) of personal computers.

The features and advantages of the invention will become apparent from the claims and the following description of the drawings showing:
Fig. 1 a perspective view of the outline of in the front surface side of the optical memory apparatus;
Fig. 2 a perspective view of outline in the rear surface side of the optical memory apparatus;
Fig. 3 a disassembled perspective view in the front side of the optical memory apparatus;
Fig. 4 a disassembled perspective view in the rear surface side of the optical memory apparatus;
Fig. 5 a enlarged view of the printed circuit board;
Fig. 6 a schematic diagram of an essential portion in the front surface side of the optical memory apparatus;
Fig. 7 a schematic diagram of an essential portion in the rear surface side of the optical memory apparatus;
Fig. 8 a schematic structural diagram of an embodiment of a cover:
   (A) a structural diagram;
   (B) an operation diagram (No. 1);
   (C) an operation diagram (No. 2);
Fig. 9 a schematic structural diagram of another embodiment of cover:
   (A) a structural diagram;
   (B) an operation diagram;
Fig. 10 a enlarged view of the fixed optical unit:
   (A) a diagram showing a layout of the optical parts;
   (B) a diagram showing condition of the head base;
Fig. 11 a diagram showing the layout of optical parts of the fixed optical unit;
Fig. 12 a diagram for explaining the optical path in the fixed optical unit;
Fig. 13 a diagram for explaining servo unit:
   (A) an external perspective view of a complex lens;
   (B) a plan view of a complex lens;
   (C) a diagram for explaining operations;
Fig. 14 a diagram for explaining a method of producing a **BW** prism;
Fig. 15 a diagram for explaining a method of producing a **BR** prism;
Fig. 16 a enlarged view of an objective lens:
   (a) a perspective view;
   (b) a cross-sectional view;
Fig. 17 an enlarged view of a lens carriage:
   (a) an upper enlarged view;
   (b) a horizontal enlarged view;
   (c) an enlarged cross-sectional view;
Fig. 18 a enlarged perspective view of a lens actuator;
Fig. 19 a diagram showing a the layout of the focus coil and the track coil;
Fig. 20 a diagram for explaining a damping effect by constitution of a wire assembly:
   (a) without a damping member;
   (b) with a damping member;
Fig. 21 a diagram explaining damping effect by a vibration absorbing member:
   (a) using a thermosetting bonding agent;
   (b) using a non-perfect setting boding agent;
Fig. 22 a enlarged view of a turn-table unit;
Fig. 23 a enlarged view of a turn-table unit and a load plate;
Fig. 24 a diagram indicating a condition of the optical memory apparatus; (Optical disc loaded)
   (a) an entire view of the apparatus;
   (b) an enlarged view of an essential portion thereof;
Fig. 25 a diagram indicating a condition of the optical memory apparatus; (Optical disc unloaded)
   (a) an entire view of the apparatus;
   (b) an enlarged view of essential portion thereof;
Fig. 26 a enlarged view of a cartridge holder;
Fig. 27 a diagram (No. 1) for explaining operations of the cartridge holder;
Fig. 28 a diagram (No. 2) for explaining operations of the cartridge holder;
Fig. 29 a schematic diagram showing a constitution of roller;
Fig. 30 a enlarged view of a FPC of the fixed optical unit:
   (a) the front surface side;
   (b) the rear surface side;
   (c) being bent;
Fig. 31 an enlarged view of a lens carriage of another embodiment;
Fig. 32 a diagram showing a constitution of the system;
Fig. 33 a schematic diagram showing an internal structure of the system;
Fig. 34 a structural diagram of a laptop type computer system;
Fig. 35 a structural diagram of a unit of the optical memory apparatus of the first embodiment:
   (a) an external view;
   (b) an internal structural diagram;
   (c) a plan view;
   (d) a block diagram;
Fig. 36 a structural diagram of a unit of the optical memory apparatus of the second embodiment:
   (a) an external view;
   (b) a block diagram;
Fig. 37 a structural diagram of a unit of the optical memory apparatus of the third embodiment:
   (a) an external view;
   (b) a block diagram; and
Fig. 38 a structural diagram of a unit of the optical memory apparatus of the fourth embodiment.

### PREFERRED EMBODIMENT OF THE INVENTION

### Outline of Apparatus

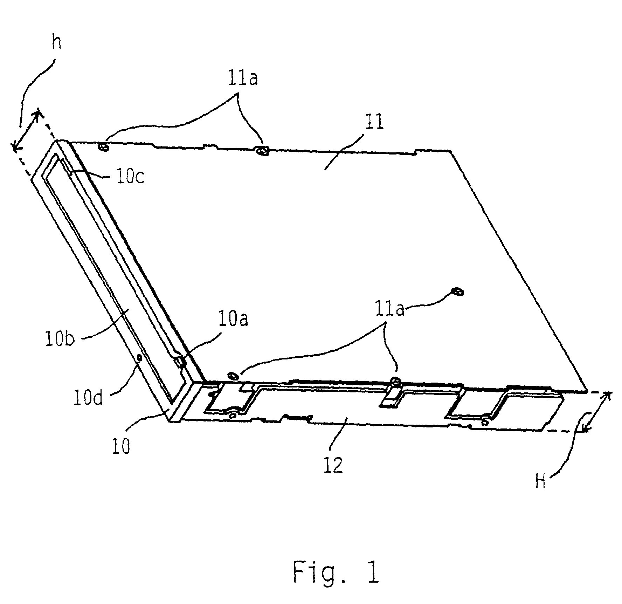

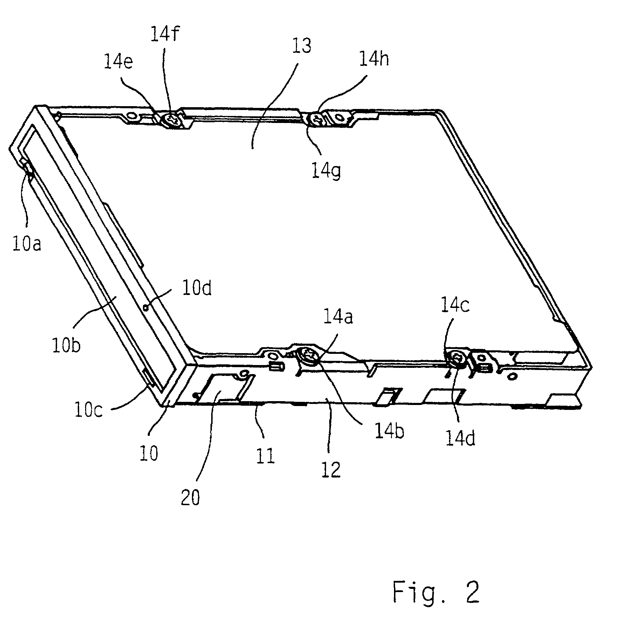

Fig. 1 is an external perspective view at the front surface side of an preferred embodiment of an optical memory apparatus of the present invention. Fig. 2 is an external perspective view at the rear surface side of Fig. 1. As a practical example, a magneto-optical disc apparatus for 3.5-inch magneto-optical disc cartridge is indicated.

In front of the optical memory apparatus, a front bezel 10 is provided. A door 10b can be freely rotated with insertion or ejection of the optical disc cartridge and is also biased by a spring, not illustrated, in the direction of the closure of the door.

Moreover, an eject button 10a is provided for instructing ejection of the optical disc cartridge by the auto-ejection method. A manual eject hole 10d is provided for inserting a pin during power failure, maintenance and check or failure of apparatus. When the pin is inserted into the manual eject hole 10d, engagement of the optical disc cartridge within the apparatus can be reset for ejection of medium. A LED 10c indicates operating condition of the apparatus by emission of light.

In a drive base 20, a front bezel 10 is fitted to the front surface of the apparatus and various kinds of IC's are mounted. Moreover, a printed circuit board 11 on which various kinds of IC's are mounted and various kinds of FPC's are connected, a frame 12 for shaping the external side and a cover 13 consisting of magnetic material having the shape where the circumference is squeezed.

Moreover, the printed circuit board 11 is coupled with the drive base 20 by a screw 11a. The cover 13 is tightened with screws 14a, 14c, 14f, 14h through the hole 13a of the cover 13, shock absorbing rubbers 14b, 14d, 14e, 14g, frame 12 and hole 13a' at the fitting area formed by partially recessing the drive base 20.

In this embodiment, height of the 3.5-inch optical disc apparatus is determined by the height H of the cabinet of the drive base 20 to which the printed circuit board 11 and cover 13 are fitted and the height h of the front bezel 10. Here, the height of the front bezel 10 and cabinet is set almost in the same level of about 17 mm. However, since the front bezel 10 and frame 12 can be provided depending on user's request, these must not always be provided.

Therefore, when the total height of the optical disc apparatus is set to about 17 mm, it can be used as the alternative memory of the floppy disk apparatus by inserting it into the space of the floppy disc apparatus unit of a personal computer or the like.

The technology for realizing reduction in size and weight by setting the height of the optical disc apparatus to about 17 mm will be explained hereunder.

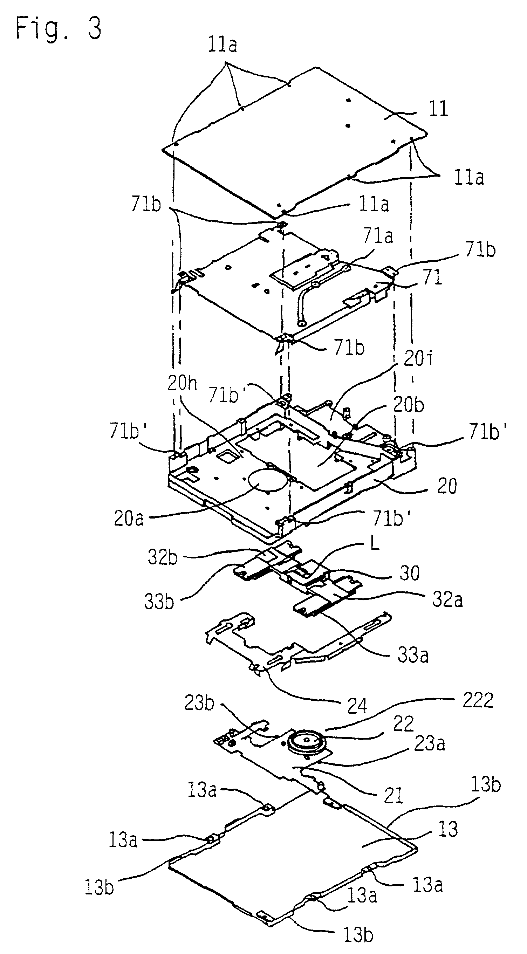

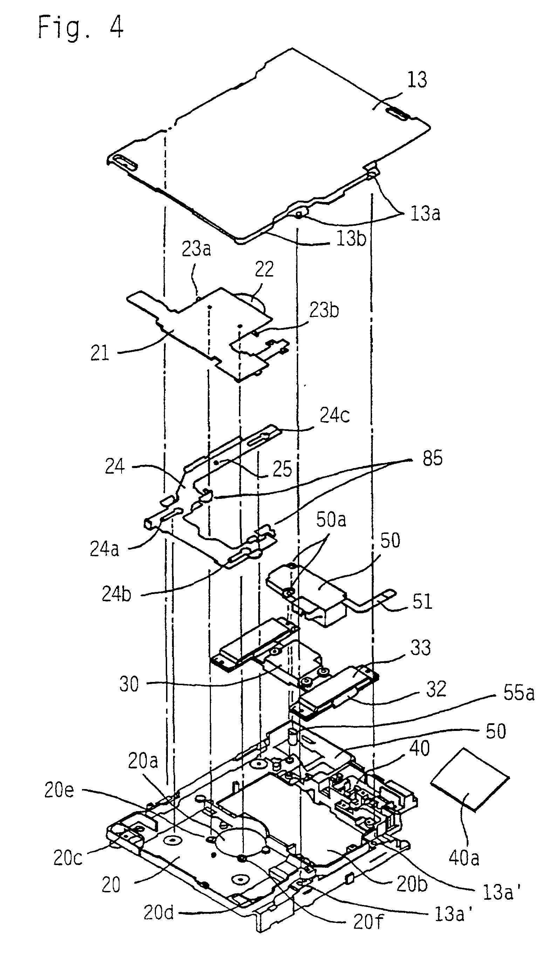

Fig. 3 is a disassembling diagram of the optical memory apparatus shown in Fig. 1 and Fig. 2. Fig. 4 shows the rear surface side of Fig. 3.

In Fig. 3, seven principal parts, roughly speaking, such as printed circuit board 11, cartridge holder 71, drive base 20, lens carriage 30, load plate 24, turn-table unit 222 and cover 13 are sequentially arranged in the magneto-optical disc apparatus.

### Cartridge holder

The drive base 20 has an accommodating means 20h of the cartridge holder 71 and the greater part of the surface of cartridge holder 71 is not projected from the end surface in the thickness direction of the drive base 20. Moreover, since the fitting part 71b' having the threaded hole of the drive base 20 to which the fitting part 71b of the cartridge holder 71 is screwed is provided by recessing a part of the drive base 20, the fitting part is not projected from the end surface in the thickness direction of the drive base 20.

Therefore, the space for mounting the circuit parts to the single surface of the printed circuit board 11 at the lowest surface of the drive base 20 is reserved, as will be explained later, by making use of the space assured from the fitting part 71b' to the end surface of the drive base 20.

### Drive base cover

In Fig. 4, the drive base 20 is provided with apertures 20a to 20f formed to mount the predetermined parts. Moreover, the drive base 20 is also provided with a fixed optical unit 40 which is integrally formed by the aluminum die cast molding for guiding the light beam to the surface of optical disc and arranging optical parts for guiding the light beam reflected from the optical disc to a photodetector. (In Fig. 4, a lens, etc. in the fixed optical unit 40 is not illustrated for simplification.) Moreover, a cover 40a for shielding dusts and light beam is mounted on the fixed optical unit 40.

Moreover, leak of magnetic flux due to reduction in thickness can be prevented by providing the cover 13 made of a ferromagnetic material such as stainless steel or the like. In addition, even when a system is constituted, any influence is not applied to the constitution that a floppy disc apparatus unit or hard disc apparatus unit which is weak to external magnetic flux and easily generates read/write failure is stacked in the vertical direction.

Moreover, a packing has been provided as a measure for preventing dust at the external edge of the inside of the cover and use of the cover 13 having the bending portion 13b which is bent and squeezed for the entire part of circumference in this embodiment forms an almost labyrinth structure covering the external edge of the drive base 20, resulting in the effect that inflow of air is shielded to prevent entry of dust to the inside thereof and strength of the cover 13 may be improved.

In addition, since a fitting part for fitting the cover 13 is formed by recessing a part of the drive base 20, screws of the fitting part are never projected from the upper most surface of the cover 13 (upper most surface of the apparatus), realizing reduction of thickness.

### Lens carriage

A lens carriage 30 for holding an objective lens L and moving an optical disc in the radius direction is integrally formed with a material such as thermo-soluble resin or the like under the condition that a coil is buried in the coil means 32 at the end part. A magnet is then additionally attached to the rear side of a yoke and a coil means 32 is movably provided through a lower yoke at the center apertures of the coil means 32a, 32b and thereafter the end portions of the upper and lower yokes are fixed by screws at the end portions thereof to form magnetic circuits 33a, 33b.

### Turn-table unit

A turn-table unit 222 is mounted on a metal plate 21 consisting of a zinc-plated steel plate or the like having insulation property and slide pins 23a and 23b are provided at the right and left sides of the metal plate 21. The turn-table 22 in diameter of 21 mm is projected toward the cartridge holder 71 from the aperture 21 of the drive base 20.

Therefore, when the optical disc cartridge is inserted into the cartridge holder 71, a hub of the optical disc is attracted by a magnetic material. provided at the surface of the turn-table 22 to hold the optical disc.

The turn-table 22 is coupled with a spindle motor which is rotated at the predetermined number of rotations.

### Eject motor

An eject motor (manufactured by Omron; R2DG-84) 50 for ejecting or unloading the optical disc cartridge is accommodated in the eject motor accommodating means 55 of the drive base 20 and is coupled with screws not illustrated via the threaded hole 50a of the eject motor and the threaded hole 55a of the drive base 20.

In order to assure the height of the predetermined dimension of the eject motor accommodating means 55, a respective height of the drive base 20 is required. Therefore, the eject motor accommodating means 55 is projected toward the space portion 20i by making use of the rear space portion 208 of the cartridge holder accommodating means 20h of the drive base 20. Accordingly, change of thickness of the drive base 20 is unnecessary and the height space (about 10.7 mm maximum) for accommodating the eject motor 50 can be assured within the range of height (about 15.8 mm) of the drive base 20, thus realizing a reduction of thickness.

### Load plate

The load plate 24 which slides toward rear side of the apparatus, owing to the drive of the eject motor 50 explained above when the optical disc cartridge is exhausted is arranged at the lower side of the metal plate 21 of the turn-table 22. When the load plate 24 slides backward in the apparatus, the slide pins 23a and 23b of the metal plate 21 slide on the guide 85 of the load plate 24, moving upward the metal plate 21 and also the turn-table 22a through the aperture 20a. Thereby, engagement with the hub of the optical disc is canceled, unloading the optical disc cartridge.

The fitting height of the load plate 24 determined by the height of the guide 85 is set to become almost equal to the height of the turn-table unit accommodating means of the drive base 20 and the load plate 24 never projects from the end face of the upper most surface of the drive base 20.

The other parts are arranged on the drive base 20 in such a side as covered with the cover 13 is also set, of course, in the height of parts and fitting height so that these are also never projected from the end face of the upper most surface of the drive base 20.

Loading/unloading of the turn-table will be explained later.

### Printed circuit board

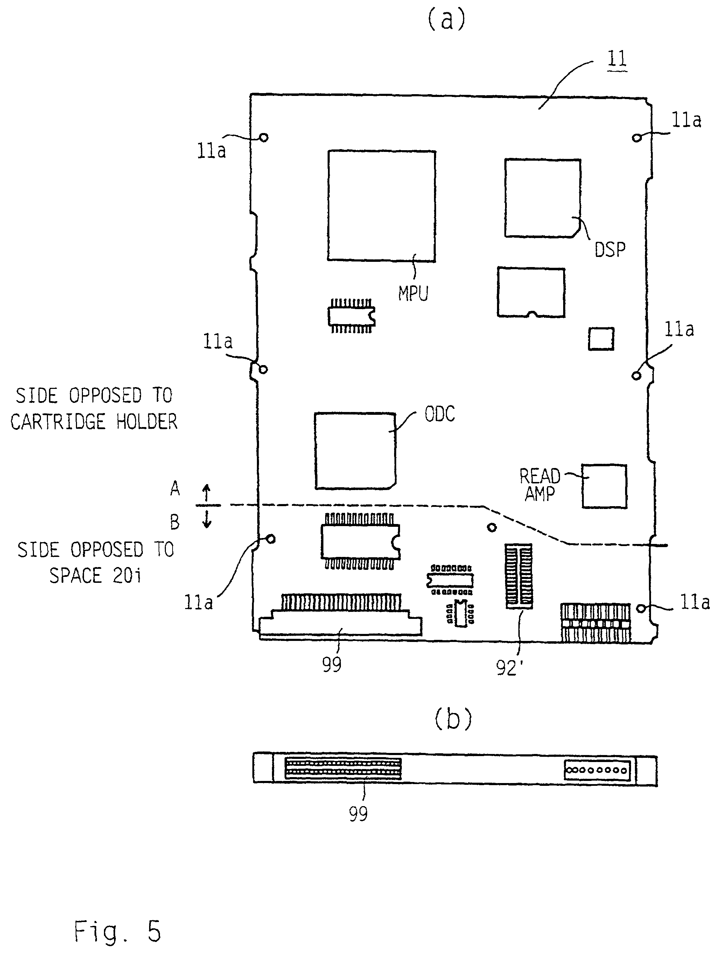

Fig. 5 is an enlarged view of a printed circuit board. On the printed circuit board 11, a power connector and an interface connector 99 are mounted and the circuit parts such as DSP, MPU, etc. for controlling the optical disc to reproduce or record and erase information are mounted on the single side. In the mounting surface side of the printed circuit board 11, the cartridge holder 71 is mounted in opposition thereto.

Moreover, lower parts (IC parts such as DSP, MPU, etc.) are mounted to the area A opposed to the cartridge holder and taller parts (capacitor, connectors 99, etc.) are mounted to the area B opposed to the space 20i in opposition to the space 20i of the drive base 20, so that the printed circuit board 11 in the side where the parts are mounted is provided opposed to the cartridge holder 71 via a dust-proof film, not illustrated. Moreover, a plurality of holes 11a of the printed circuit board 11 are stacked on the drive base 20 via the cartridge holder 71 and are then coupled with screws.

Accordingly, the thickness (height) of the drive base 20 can be reduced and the total height of the apparatus can also be reduced by considering the layout of the circuit parts on the printed circuit board 11 depending on the shape of the drive base 20 and cartridge holder 71.

In this embodiment, the height of the disk unit is further reduced by using screws having a head thickness of 0.3 mm or less. Moreover, it is possible to use a screw having a head thickness of 0.5 mm and a washer having a recessed portion which is fitted into the hole of the printed circuit board 11 and accommodates the head of the corresponding screw. Further, it is possible to use a screw having a head thinner than the printed circuit board 11 and flames which are soldered to the inside surface of the printed circuit board 11 at one end and which expand in parallel to the printed circuit board and have a hole for the screw at the other end. Thereby, the outside surface of the printed circuit board 11 is flattened by sinking the circuit board 11 is flattened by sinking the screw head within the thickness of the printed circuit board.

After the parts explained above are mounted on the drive base 20, a frame 12 is fitted to cover the circumference of the drive base 20 and a cover 13 molded by pressing a ferromagnetic material such as stainless steel or the like is screwed to the drive base 20 in the opposite side of the printed circuit board 11, thereby completing an optical memory apparatus unit.

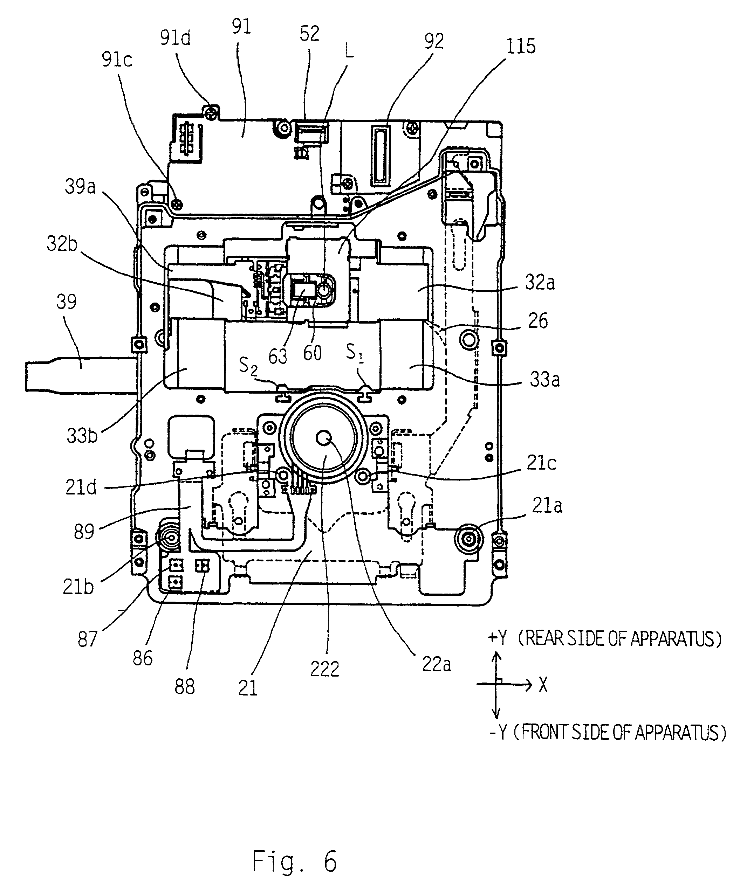

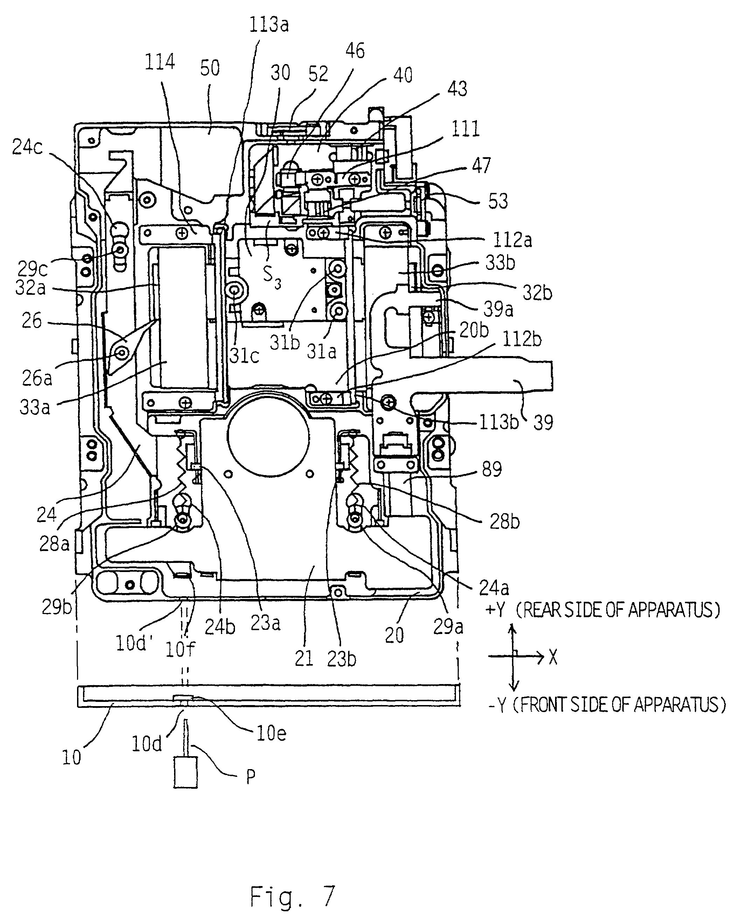

Fig. 6 is a diagram indicating the constitution of the essential portion of the front side of the optical memory apparatus, while Fig. 7 is a diagram indicating the constitution of the essential portion of the rear side thereof.

### FPC of optical system

A flexible printed circuit sheet (FPC) 91 mounting a plug-in connector 92 connected to the plug-in connector 92' of the printed circuit board 11, a photodetector 52 and circuit parts such as head IC, etc. in the space part 20i of the drive base 20 is arranged on the drive base 20 with a plurality of screws such as 91c and 91d, etc.

### Lens carriage

An objective lens L and a lens actuator 60 having a magnetic circuit to drive the objective lens L are mounted on the lens carriage 30. A flexible printed circuit sheet 39a for leading the signal to drive the lens actuator 60 in the focus direction or track direction is bonded with a bonding agent along the coil section 32a of the lens carriage 30. Moreover, a carriage cover 115 consisting of a ferromagnetic material such as stainless steel or the like is mounted around the objective lens L of the lens actuator 60.

Subsequently, voice coil motors (VCM) for moving the lens carriage 30 in the radius direction of the optical disc are provided at both sides of the lens carriage 30 and this voice coil motor (VCM) is composed of coil sections 32a and 32b of the lens carriage 30 and magnetic circuits 33a and 33b composed of yoke and magnet.

In addition, guide rails 113a and 113b which are engaged with bearings 31a to 31c provided in both sides of the lens carriage 30 to make smooth movement of the lens carriage 30 are fixed respectively while these are given a pre-pressure by the plate springs 112a, 112b and 114.

Namely, the plate springs 112a and 112b work as the fixing side for fixing the guide rail 113b in such a manner as to press it to the engaging wall of the drive base 20 in the vicinity of both ends of the guide rail 113b and the plate springs 114 works as the pre-pressure side for applying a pre-pressure the guide rail 113a in such a manner as to press it toward the guide rail 113b side (orthogonal direction to the longitudinal direction of the guide rail). Moreover, the guide rails 113a and 113b and bearings 31a to 31c have the V-shape contact to always maintain the engagement relationship not including any clearance.

The carriage stoppers S₁ to S₃ are bonded to the drive base 20 provided opposed to both end portions in the moving direction of the lens carriage 30 and is constituted by a rubber material having the buffer function for absorbing shock generated when the lens carriage 30 collides with the drive base 20. Moreover, the carriage stopper S₃ is provided closely in contact with a beam reflector prism 44, bringing about the function to protect the beam reflector prism 44 and the sealing function to prevent migration of dusts into the fixed optical unit 40 by filling the clearance generated between a window 41b and beam reflector prism 44.

In Fig. 6 and Fig. 7, it is illustrated that the carriage lock 26 provided on the load plate 24 is projected toward the lens carriage 30 to rotate from its home-position and is then locked to prevent movement of the lens carriage 30 to move in the radius direction of the optical disc.

### Turn-table

At the upper surface side of cartridge holder in which the cartridge of the drive base 20 is accommodated, a turn-table unit 222 is provided via the aperture 20a where the turn-table 22 is provided at the position opposed to the center of the optical disc. The turn-table unit accommodating means of the drive base 20 in the upper surface side of the cartridge holder is set in a height (about 6.0 mm) which is almost equal to the thickness (about 5.8 mm) of the turn-table unit 222.

A projection 22a provided at the center of the turn-table 22 projecting from the aperture 20a of the drive base 20 is engaged with the center hole of the hub of the optical disc.

The flexible printed circuit sheet (FPC) 89 is bonded on the metal plate 21. On this flexible printed circuit sheet (FPC) 89, a sensor 86 for detecting write-enable set in the optical disc cartridge, a sensor 87 for detecting write-protect set in the optical disc cartridge and a cartridge-in sensor 88 for detecting insertion of optical disc cartridge are respectively provided.

Since the 3.5-inch magneto-optical disc cartridge is standardized in 128 MB by ISO/IEC 10090 and in 230 MB by ISO/IEC 13963 and is available in the market, detail diagram of the optical disc cartridge is omitted here.

The end part of the flexible printed circuit sheet (FPC) 89 is connected to a connector provided on the flexible printed circuit sheet (FPC) 39 for transmitting a signal to control the movement of lens carriage 30 and lens actuator 60 and the flexible printed circuit sheet (FPC) 39 is bent surrounding the side surface of the drive base 20 and is connected to a connector provided on the printed circuit board 11.

Subsequently, the load plate 24 is arranged at the lower side of the metal plate 21, namely between the drive base 20 and the metal plate 21. When the load plate 24 moves in the forward or backward direction ( ± Y direction) of the apparatus, the engagement pins 29a to 29c provided on the drive base 20 move within a plurality of grooves 24a to 24c provided in the load plate 24. After the load plate 24 moves backward (+Y direction) depending on the eject instruction canceling engagement with the optical disc cartridge, the load plate 24 is moved forward (-Y direction) to quickly return to the home position with elastic force of the coil springs 28a and 28b with one ends coupled with the load plate 24 while the other ends coupled with the engagement pins 29a and 29b, respectively.

The eject instruction may be issued by depressing an eject button 10a provided on the front bezel 10 or by forcibly inserting a pin or the like into the manual eject hole 10d. In the former case, when the eject button 10a is depressed, an eject motor 50 is driven to pull the end part 24d of the load plate 24, causing the load plate to move backward in the apparatus. In the latter case, when the pin P is forcibly inserted into the manual eject hole 10d, the pin P collides with the erected part 10f of the load plate 24 and thereby the load plate 24 is pushed and moved backward in the apparatus.

### Manual eject hole

The manual eject hole 10d is an aperture provided on the front bezel 10 allowing insertion of the pin P as explained above. Moreover, an aperture 10d' is also provided on the drive base 20 provided opposed to the manual eject hole 10d. Therefore, the pin P inserted from the manual eject hole 10d is pressed to the erected wall 10f of the load plate 24, passing through the aperture space of the hole 10d'.

However, the manual eject hole 10d and aperture 10d' work as air paths, allowing inflow of dusts into the drive base 20 from outside due to an air-pressure difference generated when the disc operates.

Therefore, in this embodiment, a sealing cover 10e is respectively provided to the manual eject hole 10d and aperture 10d'. Of course, the effect for preventing inflow of dusts can be improved by providing the sealing cover to both manual eject hole 10d and aperture 10d'. However, the sealing cover can be provided only to any one of such holes depending on the shape of drive base and specifications of the front bezel, but sufficient sealing effect can be assured in comparison with the case where no sealing cover is provided.

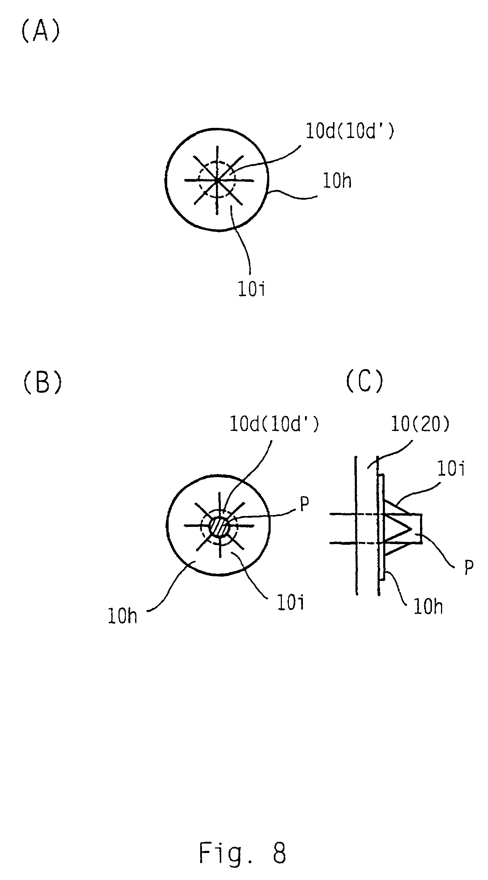

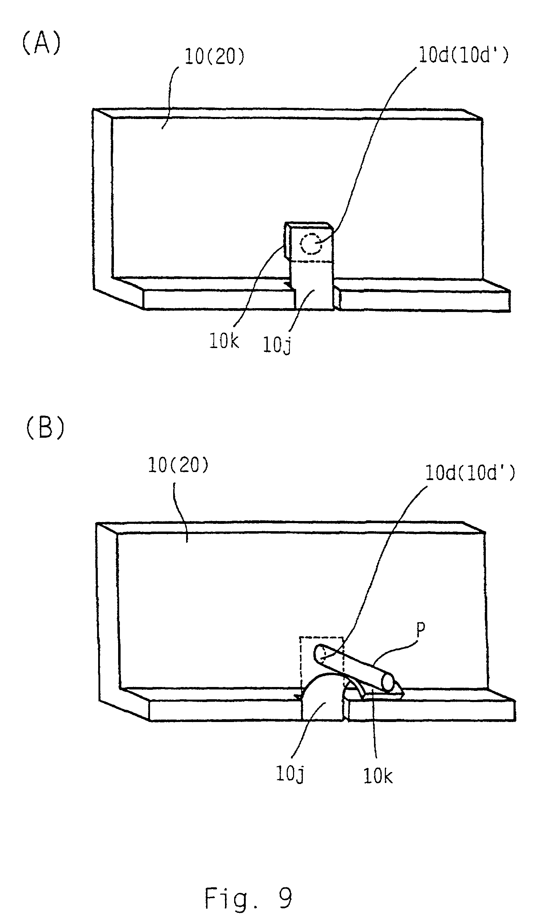

Figs. 8(A) to 8(C) and Figs. 9(A) to 9(B) show practical constitution examples of the sealing cover 10e. In Fig. 8(A), the sealing cover 10e is made of a circular thin resin sheet, wherein the external circumference is composed of a seal member 10h coated with the bonding agent for the purpose of bonding, while the center area is equally cut into eight leaves.

In Fig. 8(B) and 8(C), the pin P is inserted into the manual eject hole 10d or the aperture 10d' of the drive base 20. The equally cut eight (8) leaves 10i of resin sheet are pushed upward forming an aperture at the center area, allowing the pin P to be inserted into the inside of the front bezel 10 or the drive base 20.

The seal member 10h may be constituted, in addition to the resin, by a material having the property of rubber or sponge or a material such as aluminium foil or the like. Moreover, a double-sided bonding tape may also be used for the bonding. In addition, the seal member 10h may be circular or polygonal, as far as it can seal the hole. Moreover, the center area may be cut in any way so far as it provides the shape allowing insertion of the pin P and it may be returned easily to the original shape after the pin P is removed.

In Fig. 9(A), the sealing cover 10d is composed of a cover portion 10k consisting of rubber to close the hole (manual eject hole 10d or aperture 10d') and a plate spring 10j for fixing the cover portion 10k by bonding method and pressing it toward the hole. The plate spring 10j can be fixed, using a bonding agent, to the inside of the front bezel 10 or drive base 20. Otherwise, it can be fixed by providing a pawl thereto and then engaging such pawl with the hole provided at the inside of the front bezel 10 or drive base 20.

As shown in Fig. 9(B), when the pin P is not inserted, the hole of the cover 10k is closed to improve sealing property with a spring function of the plate spring 10j, but when the pin P is inserted, the plate spring 10j is pressed by the pressing force of the pin P to open the hole, allowing further entry of the pin P.

The cover 10k may also be formed of a resin or a material having sponge property, in addition to rubber, in order to improve contact with the hole, and the plate spring 10j may also be constituted in the simplified structure on in order to realize light weight using a thinner vinyl material such as miler film or the like or a plastic material, in addition to a metallic spring material.

### Fixed optical system

The fixed optical unit 40 is formed in the manner that a head base (of about 6.4 mm height) is formed by recessing an area lower than the turn-table unit accommodating surface at the outside of the cartridge holder accommodating means 20h in the rear side of the drive base 20 and the optical parts described later in detail are then arranged in direct on the surface of the head base.

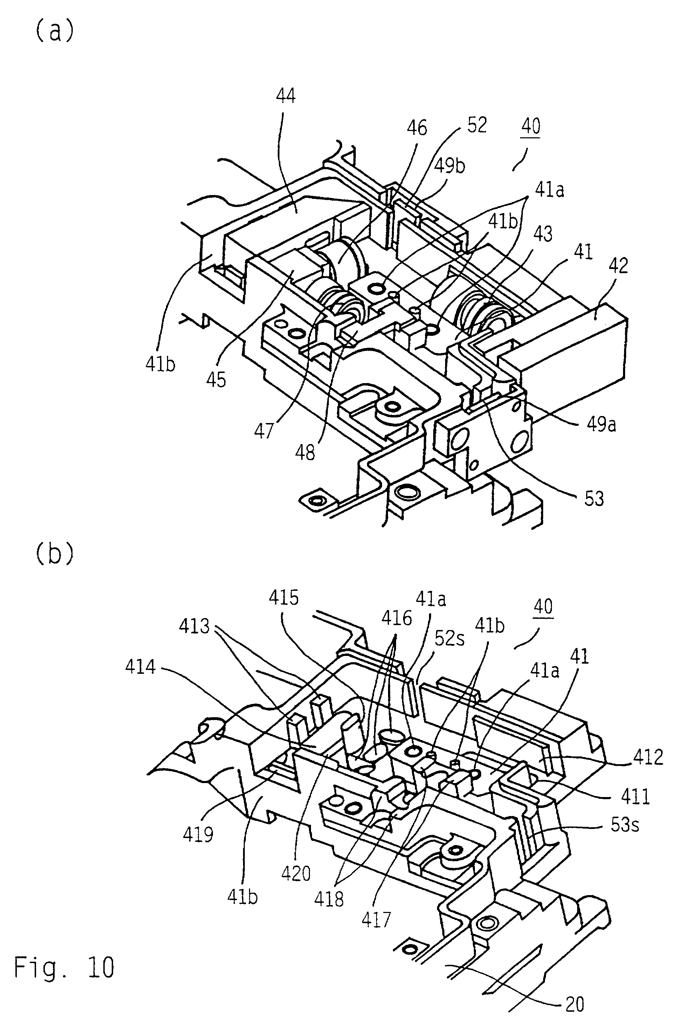

Fig. 10 is an enlarged view of the fixed optical unit 40. As shown in Fig. 10(a), a block 41 is provided in the drive base 20 and a plurality of threaded holes 41a and a plurality of positioning projections 41b are provided thereon. Moreover, the plate spring 111 indicated in Fig. 7 is extended toward the M lens 46 and S lens 47, and the collimator lens 43, M lens 66 and S lens 47 are engaged with the projection 41b in such a manner as being collided and fixed, by the elastic force, with the wall surface of the lower surface and the surface of block 41 and are then screwed through the threaded hole 41a.

Moreover, a photodetector 52 for detecting a signal for reproduced data of the optical disc from the returning light beam led from the lens carriage 30 as the movable optical unit and a photodetector 43 for detecting the focus servo signal and track servo signal are respectively fitted to the accommodating means 49a, 49b of the drive base 20.

The enlarged view of the head base not mounting the optical parts shown in Fig. 4 is illustrated in Fig. 10(b).

The head base has been formed by recessing downward a part of the drive base 20 as already explained. At the wall surface on which the optical parts are placed in contact, the blocks 411, 412 to 420 similar to the block 41 are formed in particularly higher surface accuracy.

That is, the collimator lens 43 is placed in contact with the block 411 at the bottom surface, determining the position in the height direction, is also placed in contact with the block 412 at the erected wall surface, determining the position in the forward/backward direction and is pressed, for the fixing purpose, to the wall surface of each block with the plate spring 111 explained above. Moreover, the M lens 46 is placed in contact with the block 415 of the erected wall piece, determining position in the right and left direction, is also placed in contact with the block 416' at the bottom surface, determining position in the height direction and is sandwiched between two blocks 416 which are formed a little higher than the block 416', is placed in contact therewith, determining position in the forward/backward direction and is pressed to the wall surface of each block with the plate spring 111 explained above for the fixing purpose. Furthermore, the S lens 47 is placed in contact with a block not illustrated and is pressed to the wall surface of the block with the plate spring 111, as explained above, for the fixing purpose.

The beam splitter and reflector prism 44 is placed in contact with the block 413 of the erected wall surface, determining position in the right and left direction, is placed in contact with the block 414 at the bottom surface, determining position in the height direction and position in the forward/backward direction with the block 410.

Moreover, the servo unit.48 described later is fixed in such a manner that the end part thereof is fitted in the clearance formed between the blocks 417, 418 of the erected wall piece.

Accordingly, each optical part can be arranged directly, without enhancing the surface accuracy of the entire part of the drive base 20, by positioning and fixing it through pressurized contact with the blocks 411 to 420 formed in higher surface accuracy.

Therefore, the head base can be formed directly on the drive base 20, enabling reduction in total height of the apparatus. In addition, the known separated head base is no longer necessary, realizing light weight of the apparatus.

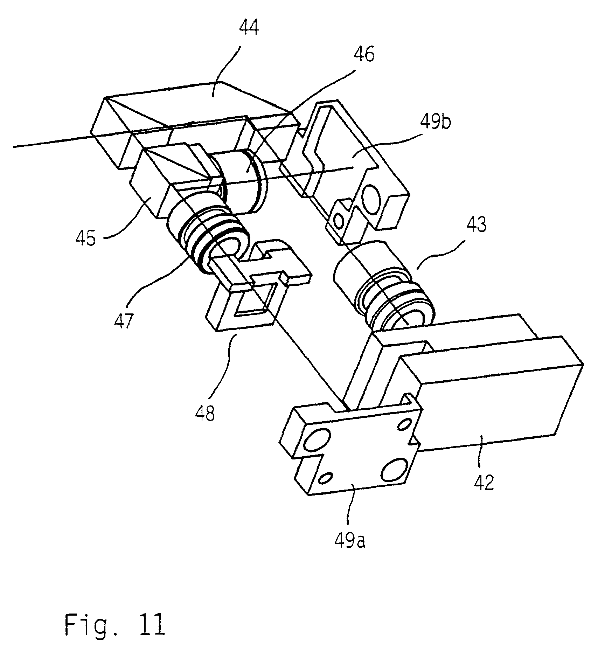

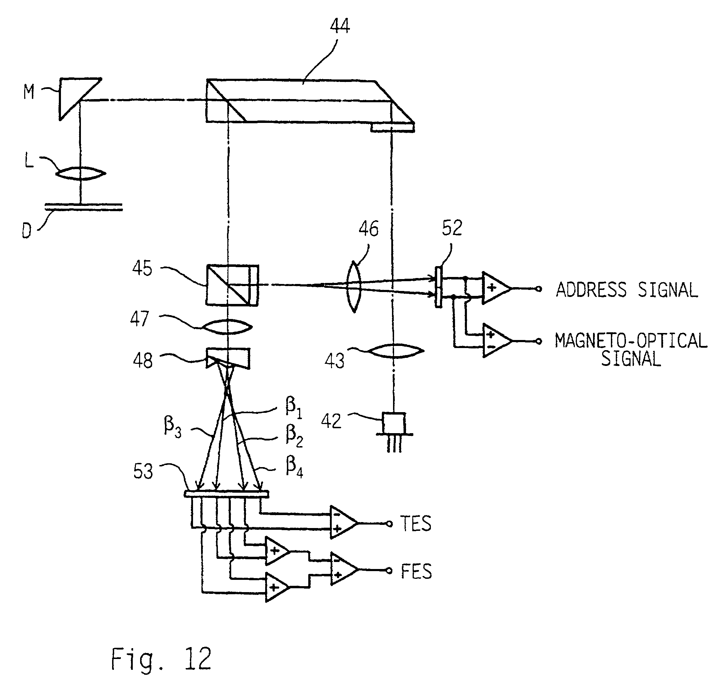

An optical system constituting the principal portion of the magneto-optical disc apparatus will then be explained. Fig. 11 illustrates an layout of the optical parts arranged on the fixed optical unit. Fig. 12 is an explanatory diagram of an optical path of the light beam within the fixed optical unit 40.

The fixed optical unit 40 is formed in the predetermined shape in higher accuracy so that optical parts can be arranged on the drive base 20. A laser diode unit (LD unit) 42 emits the light beam having the predetermined emission power.

Particularly, the laser diode unit (LD unit) 42 shortens the light path contributing to reduction in size of the apparatus in the depth direction by emitting the light beam from the seek direction and vertical direction of the lens carriage 30, refracting light beam with a 45-degree rise mirror and then guiding the light beam to a rise mirror M within the lens carriage 30.

The emitted light beam passes through the collimator lens 43 and subsequent beam splitter and reflector prism (BR prism) 44 and is then guided to the objective lens L of the lens actuator 60, not illustrated, from the window 41b. Thereby, the optical beam squeezed by the objective lens L is then radiated to the optical disc.

Thereafter, the returning beam reflected from the optical disc D is guided to the window 41b' via the objective lens L, then guided to the beam splitter and Wollaston (BW prism) 45 via the beam splitter and reflector prism (BR prism) 44 for the polarization into the reproduced signal, focus signal and track signal of the optical disc. The reproduced signal (address signal and magneto-optical signal) is guided to the photodetector 52 arranged in the accommodating means 49 of the drive base 20 passing through the slit 52S via the M lens 46. Moreover, the focus signal and track signal are guided to the L lens 47 from the beam splitter and Wollaston prism (BW prism) 45, thereafter separated into a plurality of signal elements β₁ to β₄ with a servo unit 48 and are then guided to the photodetector 53 arranged in the accommodating means 49a via the slit 53. The photodetector 53 generates the focus signal FES and track signal TES from the signal elements β₁ to β₄.

### Servo unit

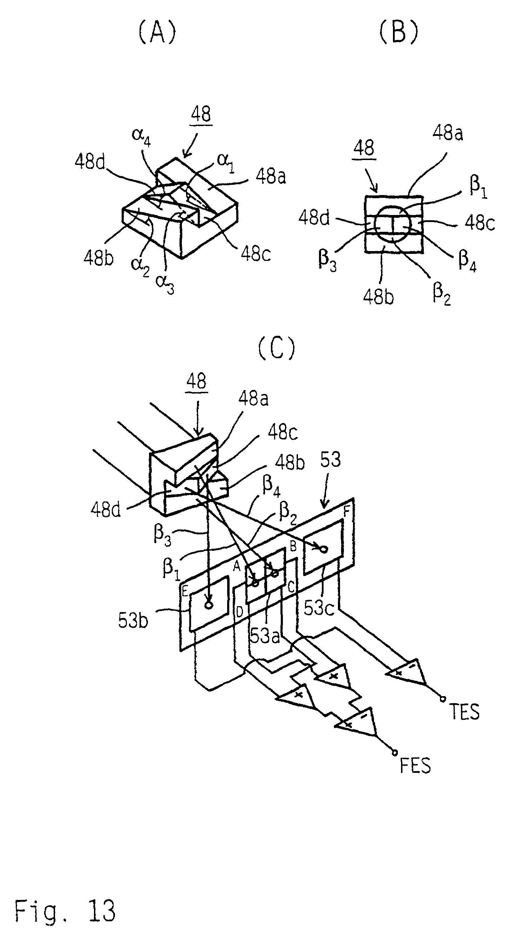

Fig. 13(A) and Fig. 13(B) illustrate a structure of a complex lens of the servo unit 48. The servo unit 48 has a structure of the light emitting surface that a first light emitting surface 48a for emitting the first light flux β₁ among the flux of the returning beam is inclined in the right side, while a second light emitting surface 48b for emitting the second light flux β₂ is inclined in the left side, respectively in the figure. Moreover, a third and a fourth light emitting surfaces 48c, 48d for emitting the third and fourth light flux β₃ to β₄ are formed in the shape of hill.

The first light emitting surface 48a is inclined in the same direction as the third light emitting surface 48c and the inclination angle α₁ is smaller than the inclination angle α₃ of the third light emitting surface 48c.

The second light emitting surface 48b is inclined in the same direction as the fourth light emitting surface 48d and the inclination angle α₂ is smaller than the inclination angle α₄ of the fourth light emitting surface 48d.

Fig. 13(C) is a diagram illustrating a photodetector 53. The returning light beam from the optical disc D guided by the L lens 47 is splitted into four beams of β₁ to β₄ by the servo unit 48 and is respectively received by the photodetector 53. The photodetector 53 is formed in such a manner that the first receiving means 53a splitted into four regions (A to D) for receiving the first and second light beams β₁, β₂ the second receiving means 53b for receiving the third light beam β₃ and the third receiving means 53c for receiving the fourth light beam β₄ are formed on the same plane (these may be separated, respectively).

In more detail, the first light beam β₁, emitted from the first light emitting surface 48a among the light flux of the returning light beam is received by the regions A, D of the first light receiving means 53a of the photodetector 53, while the second light beam β₂ emitted from the second light emitting surface 48b is received by the regions B, C of the first light receiving means 53a. Thereby, the arithmetic operation of (A+C) - (B+D) is carried out depending on the Foucault method to detect a focus error signal.

The third light beam β₃ emitted from the third light emitting surface 48c among the light flux of the returning light beam is received by the second receiving means 53b of the photodetector and the fourth light beam β₄ emitted from the fourth light emitting surface 48d is received by the third light receiving means 53c (region F). Thereby, the arithmetic operation of (E-F) is carried out depending on the Push-Pull method to detect a tracking error signal.

As explained above, since it is not required to split the light path into two paths even when the Foucault method is used for focus detection, while the Push-pull method for tracking error signal detection, a volume of the fixed optical system occupying the apparatus can be reduced and the number of parts required can also be reduced by shortening the optical path.

The practical detail of the servo unit 48 is well known because it is described in the Japanese Patent Laid-Open No. 250704/1993.

### Method for manufacturing prisms

Next, the BR prism or BW prism explained above must be produced in small size for mounting into a super-miniaturized optical disc apparatus in total height of about 17 mm as in the case of this embodiment. Here, a Cube type prism is considered as an example. When the size of width W x length L x height H (6 x 6 x 6) [mm] is reduced to 5 x 5 x 5 [mm], the tolerance must be reduced from ± 0.1 mm to ± 0.08 mm so that angular deviation of prism due to the fitting accuracy becomes equal (tolerance/size = 0.1/6 ≒ 0.08/5).

However, when the prism is reduced in size from 6 mm type to 5 mm type as explained above, tolerance also becomes small, requiring the higher fitting accuracy. On the other hand, a method of producing a small size prism without making smaller the tolerance will be explained below.

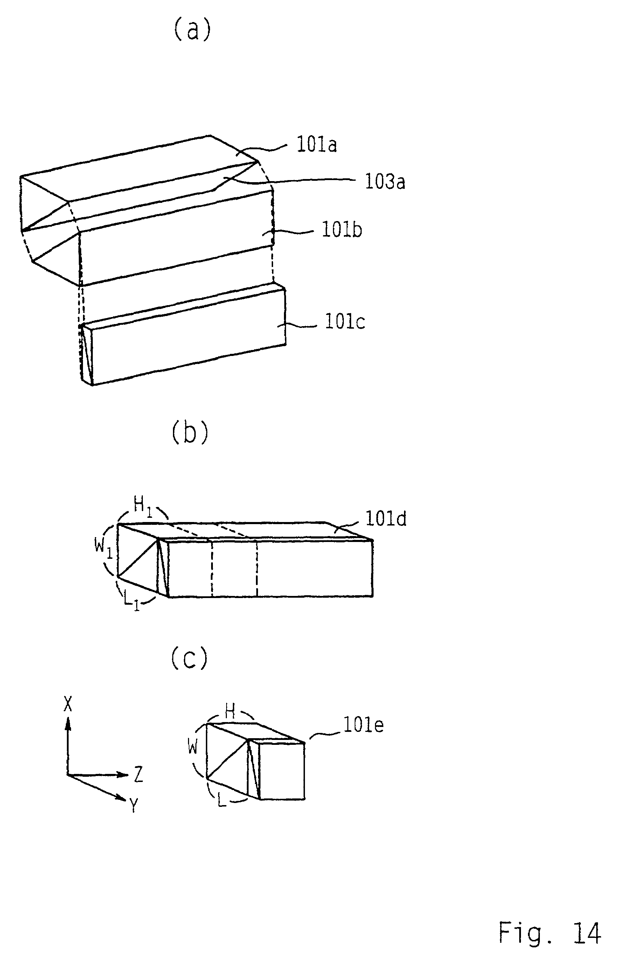

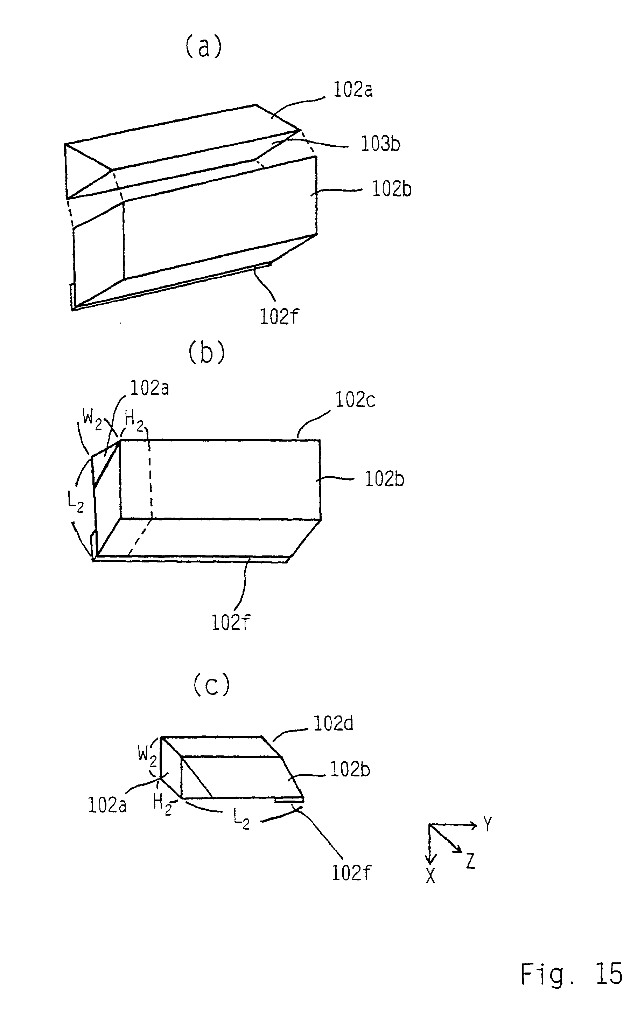

Figs. 14(a) to 14(c) are explanatory diagram of the method for producing a beam splitter and Wollaston prism (BW prism). Two triangular elongated prisms 101a and 101b, each of which having the matched rectangular shape of at the opposing surface are prepared. One prism 101a allows formation of an evaporated film 103a at the predetermined surface and these two prisms 101a and 101b are bonded with the end portions thereof orderly aligned, while the evaporated film 103a is provided opposed to the predetermined surface of the other prism 101b. In addition, an LN Wollaston prism 101c is bonded to the predetermined surface of the prism 101b.
An angular pole type prism 101d in the size of width W₁ x length L₁ manufactured as explained above is cut in the predetermined length H₁ to produce the predetermined number of BW prisms 101e.
A method of manufacturing a beam splitter and reflector prism (BR prism) will also be explained with reference to Figs. 15(a) to 15(c).
A triangular pole type prism 102a and an angular pole type prism 102b having the matched rectangular shape of the opposing surface are also prepared. One prism 102a allows formation of an evaporated film 103b at the predetermined surface and these two prisms 102a and 102b are bonded with the end portions thereof orderly aligned, while the evaporated film 103b is provided opposed to the predetermined surface of the other prism 102b. In addition, a half-wave length plate is bonded to the lower surface of the angular pole type prism 102b. The prism 102c in the size of width W₂ x length L₂ manufactured as explained above is cut in the predetermined length H₂ in the narrow width to produce the predetermined number of BR prisms 102d.

The BR prism and BW prism manufactured as explained above are arranged as shown in Fig. 10 and Fig. 11 so that the cutting lengths H₁ and H₂ become equal to the lengths in the height (thickness) direction (Z direction) of the optical disc apparatus. That is, reduction in size in the height direction can be realized by locating the surface having the lengths H₁ and H₂ which easily generate an cutting error to the position not taking part in the fitting accuracy, namely to the position in the height direction and improvement in the fitting accuracy can be improved without changing the size of the width direction and depth direction.

Moreover, a diameter of light beam flux ΦD emitted from the LD unit 42 is set in the relation, ΦD > 1.0. For example, when the height of prism is 5 mm, light beam flux ΦD is set as sufficiently small as 2 mm so that the light beam flux does not exceed the surface in the height direction of the prism. Accordingly, even when the prism is reduced in size, the minimum accuracy can be maintained.

It is, of course, possible to apply prisms other than those explained in this embodiment.
Use of the prism manufactured as explained above assures to obtain the sufficient fitting accuracy even when a surface having a bad surface accuracy such as the drive base made of aluminum diecast as shown in this embodiment is used as the head base, and it also enables direct mounting thereof to the drive base without using a separately prepared head base.

### Objective lens

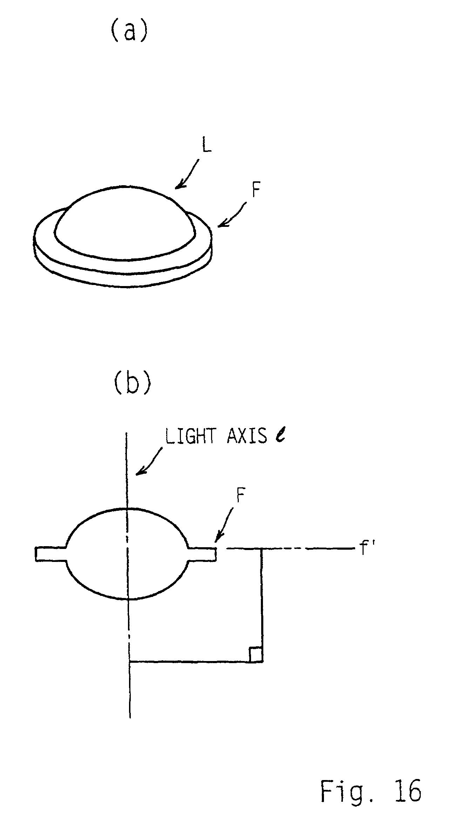

Fig. 16(a) is an enlarged perspective view of the objective lens, while Fig. 16(b) is a cross-sectional view of the objective lens.

The objective lens L is provided with a flat portion F having the flat surface in such a shape of a collar of a hat at the external circumference thereof. While one end face f' of the flat portion F is being adjusted to become vertical to the optical axis, the flat surface F is butted and then bonded in order to fix it to the end surface of the lens mounting means 62a of the lens actuator 60.

Therefore, even when the objective lens L becomes small in size, it can be mounted to the lens mounting means 62a in higher accuracy by the simplified adjusting method.

### Lens carriage

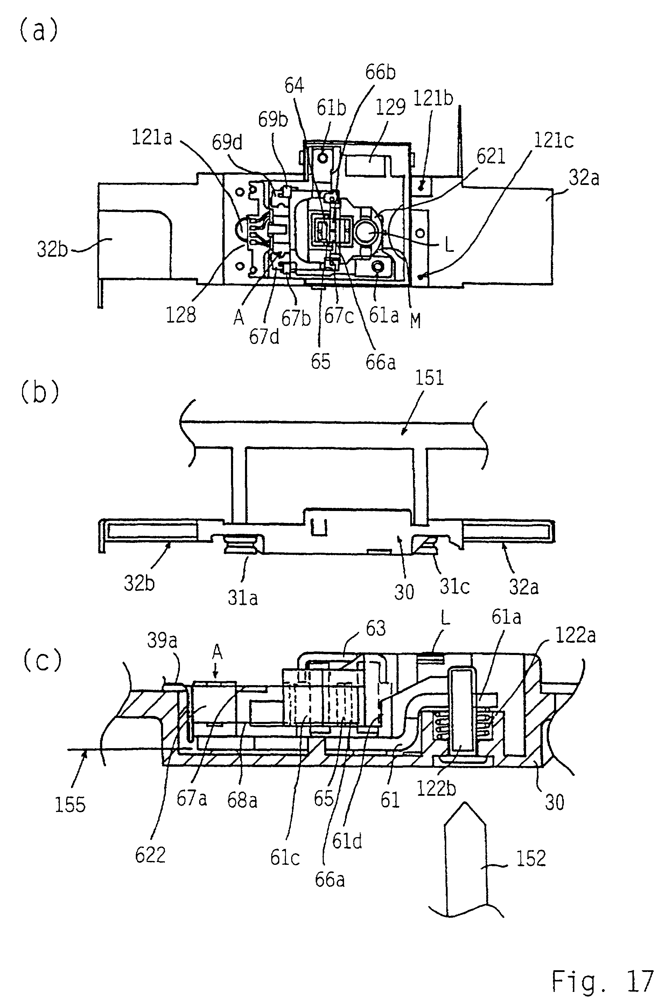

Figs. 17(a) to 17(c) are enlarged views of the lens carriage, illustrating a method of adjusting the optical axis of the objective lens on the lens carriage.

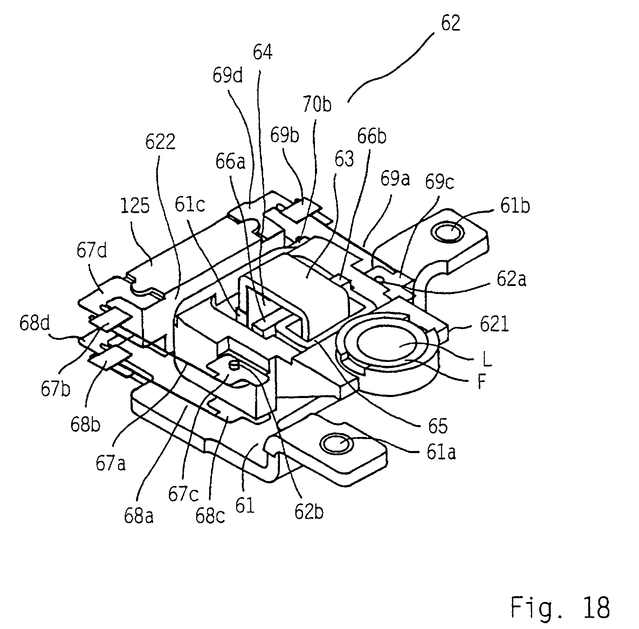

At the center of lens carriage 30, the space for mounting a cover glass to input and output the optical beam to the fixed optical unit 40, a rising mirror M for raising the optical beam from the cover glass for 45 degrees and a lens actuator 60 to hold the objective lens L is formed. Details of the lens actuator 60 will be explained later with reference to Fig. 18. In addition, at both sides of the lens carriage 30, the bearings 31a to 31c and coils means 32a, 32b explained above are provided.

Next, a method of adjusting the optical axis of the objective lens L will be explained.

On the occasion of loading the lens actuator 60 on the lens carriage 30, a jig **151** is applied to the standard grooves 121a to 121c using an auto-collimator or the like to give a pre-pressure A to the predetermined position in view of detecting inclination by irradiating the objective lens L with the light beam. The screw 122b inserted at the center area of the coil spring 122a is closed with a screw-driver 152, under the condition that the coil spring 22a is provided between the screw fitting portions 61a, 61b of the lens actuator 60 and the bottom surface of the lens carriage 30, so that the flat surface F of the objective lens L becomes almost parallel to the disc mounting surface 22b of the turn-table 22, that is, the optical axis I of the objective lens L becomes almost perpendicular to the optical disc surface.

Therefore, inclination of the objective lens L, that is, inclination of the optical axis I can be fine-adjusted with an elastic pressure of the coil spring 122a. Thus, since the actuator 60 is provided with two fitting points, the objective lens can be fine-adjusted in two directions with a couple of screws, that is, the objective lens can be fine-adjusted in two-dimension.

### Actuator

Fig. 18 is an enlarged view of a lens actuator. The movable means of the actuator 60 is composed of a lens holding means 621 made of a thermosetting resin or the like to movably hold the objective lens L in the track and focus directions, a focus coil 65 provided in bonding at the wall part of the center aperture of the lens holding means 621 and track coils 66a, 66b bonded in the opposite surface from the afore-mentioned bonding part of the focus coil 65.

A couple of track coils 66a and 66b provided at the right and left sides of the focus coil 65 are wound almost in the vertical direction to the winding surface of the focus coil 65 and the end part thereof is protruded in the right and left sides toward the outside from the end surface of the yoke 63 of the magnetic circuit. Namely, influence of the magnetic flux is eliminated to control not to generate mechanical oscillation by locating the portions extending in both upper and lower directions of the track coils 66a and 66b to the position outside the magnetic circuit.

Moreover, a magnetic circuit of the actuator 60 is constituted by a magnet 64 provided on the actuator base 62 opposing to the track coil 65 at the center aperture of the movable side lens holding means 621, a yoke 61c consisting of a bending part of the actuator base 61 receiving a magnetic force of the magnet 64, a yoke 61d consisting of a bending part provided opposed to the yoke 61c and a U-shaped cover yoke 63 coupling such two yokes.

In addition, there are provided four wires 67a, 68a, 69a (one is not illustrated) for holding the movable part of the actuator 60, terminals boards 67c, 68c, 69c (one is not illustrated) which are bonded with the holes being engaged with the projections 62a, 63b of the lens holding means 621 to hold the end part of the wires in the objective lens side and terminal boards 67d, 68d, 69d (one is not illustrated) bonded to the wire holding means 62c fitted to the end part of the actuator base 61. The vibration absorbing members 67b, 68b, 69b, 70b (one is not illustrated) to absorb vibration of the wires are also provided.

The end part **125** of the FPC 39a is extended on the wire holding means 622 and are soldered to four terminal boards on the wire holding means 622. Moreover, the four terminal boards on the lens holding means 621 are soldered respectively with two lead wires of the focus coil **65** and track coils 66a, 66b. As explained above, continuity among the focus coil 65, track coils 56a, 66b and FPC 36a can be attained. Accordingly, since electrical connection can be made without routing fine lead of each coil, there is no fear of disconnection and improvement in reliability can be realized.

Moreover, four wires and terminal boards at both ends of each wire are manufactured by processing plate spring material and linear spring material using a pair of dies (in the shape of inverted C) coupling a pair of right and left wires. A pair of right and left wires in the coupled (in the shape of inverted C) condition are attached to the wire holding means 622 and thereafter the coupling portion is cut out. Therefore, small size parts can easily be dealt and managed, with improvement in the assembling efficiency, by using the wire assembling manufactured as explained above.

The actuator base 61 can be screwed, under the condition that all parts of the actuator 60 are mounted, to the lens carriage 30 via the fitting portions 61a and 61b of the bending piece of the actuator base 61.

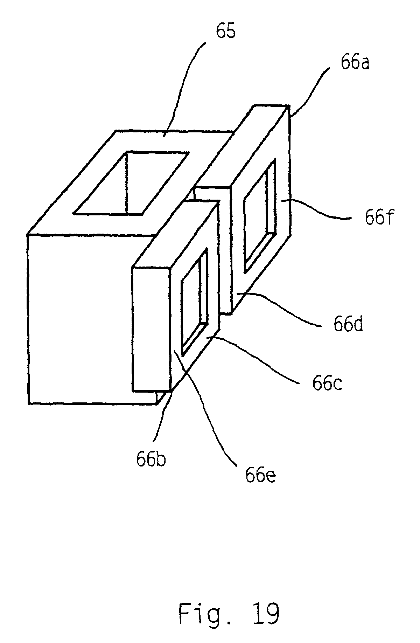

Fig. 19 illustrates layout of the focus coil 65 and track coils 66a, 66b in the magnetic circuit of the lens actuator.

In the track coils 66a, 66b, only the internal coils 66c, 66d are used for generating a drive force, while the external coils do not take part in.

However, if the external coils 66e, 66f are not located at the area sufficiently far from the gap magnetic flux of the magnetic circuit, a drive force is applied, intensively or slightly in some cases, in the direction inverted from that it should be, depending on movement of the lens actuator. In this case, since the drive force is not stabilized and a force in the direction different from the intrinsic drive force is generated, the lens actuator moves in such an attitude as is deviated from the control direction, making difficult the control thereof.

In this embodiment, on the contrary, since the external coils 66e, 66f, which do not take part in generating a drive force, are located at an area sufficiently far from the gap magnetic flux, preventing behaviours of the actuator as explained above.

### Wire assembly

The wire assemblies 67a, 68a, 69a (one is not illustrated) explained above are constituted, sequentially from the upper layer, by vibration absorbing plate (damping plate) consisting of Kapton, miler film or the like, double-sided bonding tape for bonding the damping plate bonding layer consisting of non-perfect setting bonding agent, wire, bonding layer and damping plate.

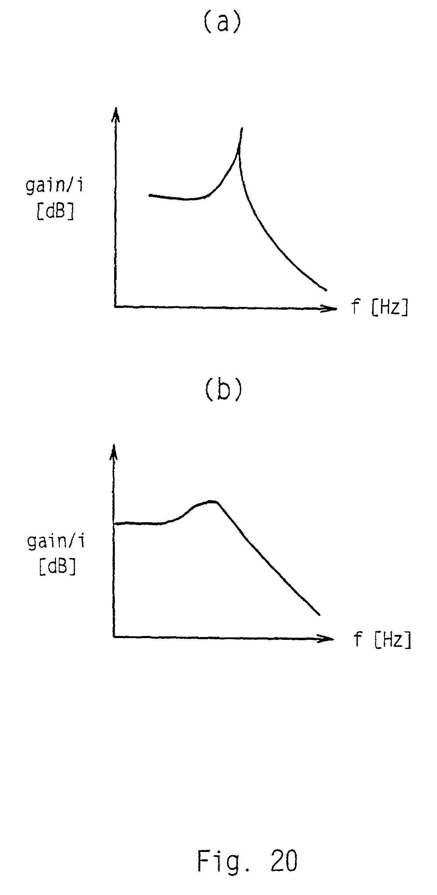

Fig. 20 is a comparing diagram illustrating difference in constitution of the wires. Fig. 20(a) illustrates only the wire without including any damping member. Fig. 20(b) illustrates the wire including the damping member as is used in the embodiment explained above. In these figures, the horizontal axis indicates frequency (Hz) of a current applied to the wire, while the vertical axis indicates a gain (dB), namely, vibration for the current (i).

Comparison between Fig. 20(a) and Fig. 20(b) teaches that sharp peaks are formed at a certain frequency when only wire is used as shown in Fig. 20(a), but there is no such peak value as shown in Fig. 20(a) and vibration is rather attenuated when a damping member is used as shown in Fig. 20(b).

Therefore, if shearing deformation is generated in the wire assembly, vibration in the focus direction and track direction of the wire assembly can be absorbed by covering the surrounding of the wire assembly with the boding layer explained above or with a damping member such as a vibration absorbing plate. Namely, the vibration can be attenuated to about 1/10 or less than that generated when only the wire is used.

### Vibration absorbing member

As explained previously, a vibration absorbing (damping) member is provided near the wire holding means 621 of four wire assemblies. The vibration absorbing member is formed as a thin plate, which is composed, like the wire assembly explained above, of a vibration absorbing plate constituted by aluminum foil, Kapton, miler film or the like, bonding layer consisting of double sided bonding tape or non-perfect setting bonding agent, and the vibration absorbing plate is bonded by the bonding layer. In this embodiment, the vibration absorbing members 67b, 68b, 69b are provided but since the bonding layer actually plays an important role for absorption of vibration, only a bonding agent having soft-viscosity can also provide sufficient damping effect.

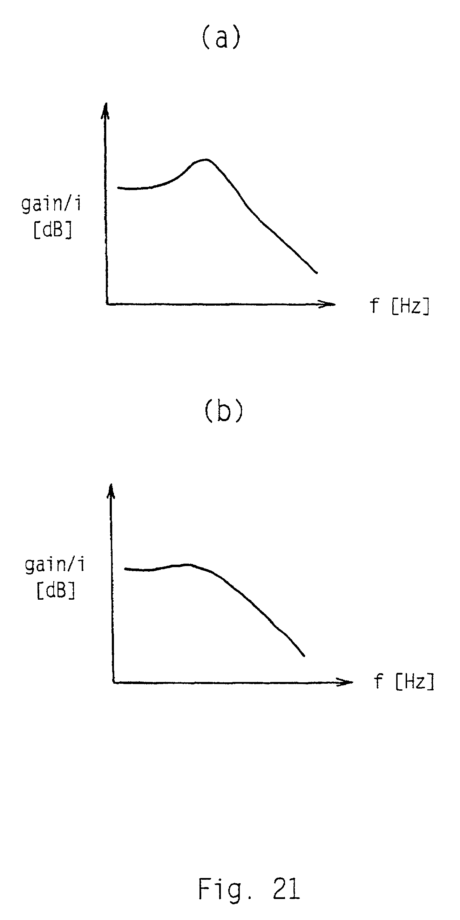

Fig. 21(a) shows the result when a thermosetting bonding agent such as epoxy-based material is used, while Fig. 21(b) shows the result when a non-perfect setting bonding agent such as a silicon-based or ultraviolet setting type bonding agent is used. In these figures, the horizontal axis indicates frequency (Hz) of a current applied to wire, and the vertical axis indicates gain (dB), namely vibration for the current.

Comparison between Fig. 21(a) and Fig. 21(b) teaches that a sharp peak value is formed at a certain frequency, namely vibration is generated when the thermosetting bonding agent is used as shown in Fig. 21(a), but such sharp peak value as shown in Fig. 21(a) is not generated and vibration is rather attenuated when the non-perfect setting bonding agent is used as shown in Fig. 21(b).

Therefore, if shearing deformation may be generated at the wire assembly, vibration in the focus direction and track direction in the wire assembly can be absorbed to about 1/10 or less than that generated when only the wire is used to attenuate the vibration by providing the vibration absorbing members 67b, 68b; 69b such as bonding layer and vibration absorbing member or the like explained previously to the area of the wire assembly having a larger deforming angle during the drive of the lens actuator 60 or movement of lens carriage.

Meanwhile, since the thin plate vibration absorbing members 67b, 68b, 69b are provided in the manner that the plate surfaces become parallel to the bottom surface of the lens carriage 30, its behaviour does not give any influence on the adjacent wire assembly.

Employment of the lens actuator as explained above brings about a high performance and thinner lens carriage.

### Turn-table unit

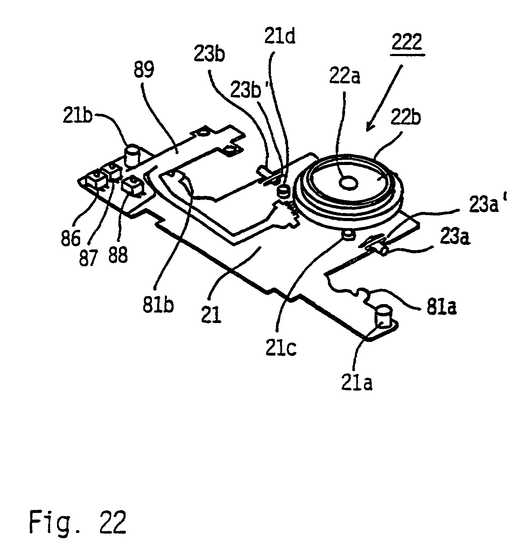

Fig. 22 illustrates an enlarged view of the turn-table unit.

A turn-table 22 is constituted by a magnetic material for attracting a metal part of hub of an optical disc and is further provided with a projection 22a to be engaged with a center hole of the hub of optical disc and an external circumferencial part 22b to be placed in contact with the hub of optical disc to play an important role for assuring surface accuracy.

Moreover, the metal plate 21 is constituted in a simplified structure to have the projections 21a to 21b to be engaged with a plurality of apertures 20c to 20d of the drive base 20, apertures 21c to 21d to be engaged with a plurality of projections 20e to 20f of the drive base, curved pieces 81a, 81b being bent and moreover elongated engaging pieces 23a', 23b' which are cut in a smaller width and bent in different directions for the engagement with the slide pins 23a, 23b having the rollers at the end portions, which are all formed by the single process with the press technique.

On the metal plate 21, the turn-table 22 is rotatably mounted and the flexible printed circuit sheet (FPC) 89 is bonded. On this flexible printed circuit sheet (FPC) 89, a sensor 86 for detecting the write enable signal preset to the optical disc cartridge, a sensor 87 for detecting the write protect signal preset to the optical disc cartridge and a cartridge-in sensor 88 for detecting insertion of the optical disc cartridge are provided respectively.

The flexible printed circuit sheet (FPC) 89 further transfers the signals of sensors explained above and a drive signal to the turn-table 22.

Since the turn-table unit is constituted as explained above and the drive circuits, for example, for driving the turntable 22 are all mounted on the printed circuit board 11, the metal plate mounted on the PFC can be made thinner and the number of parts on the drive base 20 at the upper layer of the cartridge holder 71 can be saved, thereby enabling reduction in size in the height direction of the apparatus. Namely, the drive base 20 at the upper layer of the cartridge holder 71 can be set to the higher one of the heights of the turn-table 22 or guides 82a, 82b, 83a, 83b.

In this embodiment, since the shapes of the guides 82a, 82b, 83a, 83b and curved pieces 81a, 81b are determined as shown in the figures, upward movement of the turn-table unit 222 can be controlled and height of the turn-table unit 222 can be set almost equal to the height of the drive base 20 at the upper layer of the cartridge holder 71.

Therefore, the height (about 6.0 mm) of the drive base at the upper layer of the cartridge holder 71 can be controlled only to the height of the cartridge holder 71 determined by the thickness of the cartridge and the upward movement of the turn-table unit 222 (the maximum upward movement because the turn-table moves upward to the turn-table unit accommodating means from the cartridge accommodating means of the drive base 20 via the aperture 20a when the cartridge is exhausted, that is, a value (about 5.8 mm) determined by the sum of the turn-table fitting thickness and metal plate fitting thickness), thus enabling the height of about 17 mm.

Accordingly, since height of the drive base at the upper layer of the cartridge holder can be reduced by employing a thinner turn-table unit, height of the optical memory apparatus can be approximated to almost the same thickness (about 5 mm) of the cartridge.

### Unload mechanism

Unloading of the optical disc can be achieved by engagement of respective parts of the turn-table unit 22, eject motor unit 50 and load plate 24 explained previously.

Firstly, when the eject button 10a provided at the front bezel 10 is depressed or a pin or the like is intensively inserted into the manual eject hole 10d, ejection of the disk can be instructed manually.

In the former case, when the eject button 10a is depressed, the eject motor 50 is driven and when the end part 24d of the load plate 24 is pulled next, the load plate moves to the rear side of the apparatus. In the latter case, when the pin or the like is intensively inserted into the manual eject hole 10d, the pin collides with the erected wall part 10f of the load plate 24 and thereby the load plate 24 is moved to the rear side of the apparatus.

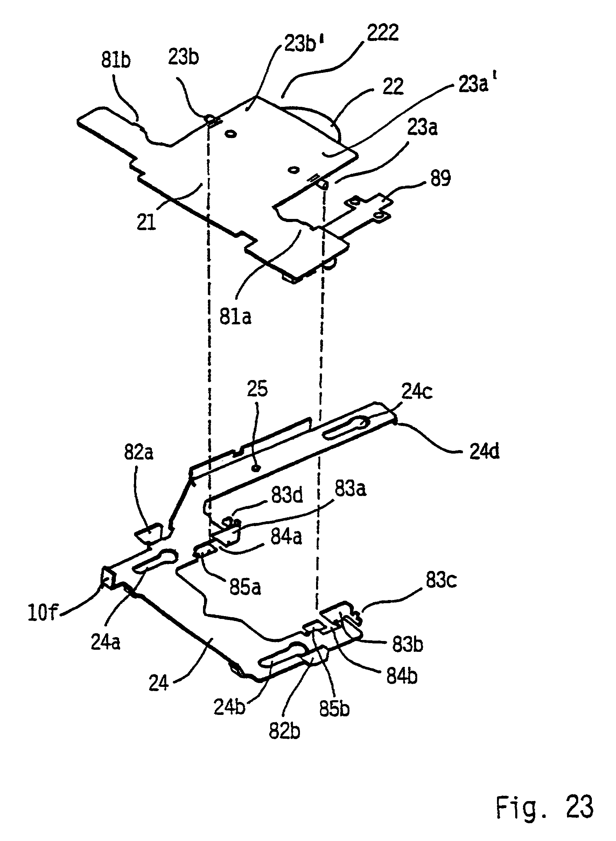

Fig. 23 is an enlarged view of the turn-table unit and load plate. The metal plate 21 of the turn-table unit 222 is provided with the fitted slide pins 23a, 23b to be engaged with the load plate. The load plate 24 is provided at the lower side of the metal plate 21 effectuating the function to raise the metal plate 21 including the turn-table 22.

In more detail, the load plate 24 is provided with guide holes 84a, 84b having the slope rising toward the front side of the apparatus for engagement with the slide pins 23a, 23b of the metal plate 21, first guides 83a, 83b for stably introducing the guide holes 84a, 84b and second guides 85a, 85b having the flat surface which are formed lower than the first guides for stably introducing the slide pins 23a, 23b engaged with the guide holes 84a, 84b and allowing the slide pins 23a, 23b having left the guide holes 84a, 84b to ride over such flat surface.

Further, the load plate 24 is also provided with third guides 82a, 82b having the slope rising toward the front side of the apparatus. Therefore, with movement of the load plate 24 to the rear side of the apparatus, the slide pins 23a, 23b of the metal plate 21 slide on the second guides 85a, 85b by rotating the rollers at the end portions thereof and the curved pieces 81a, 81b of the metal plate 21 slide on the slope of the third guides 82a, 82b, thereby pushing upward the metal plate 21.

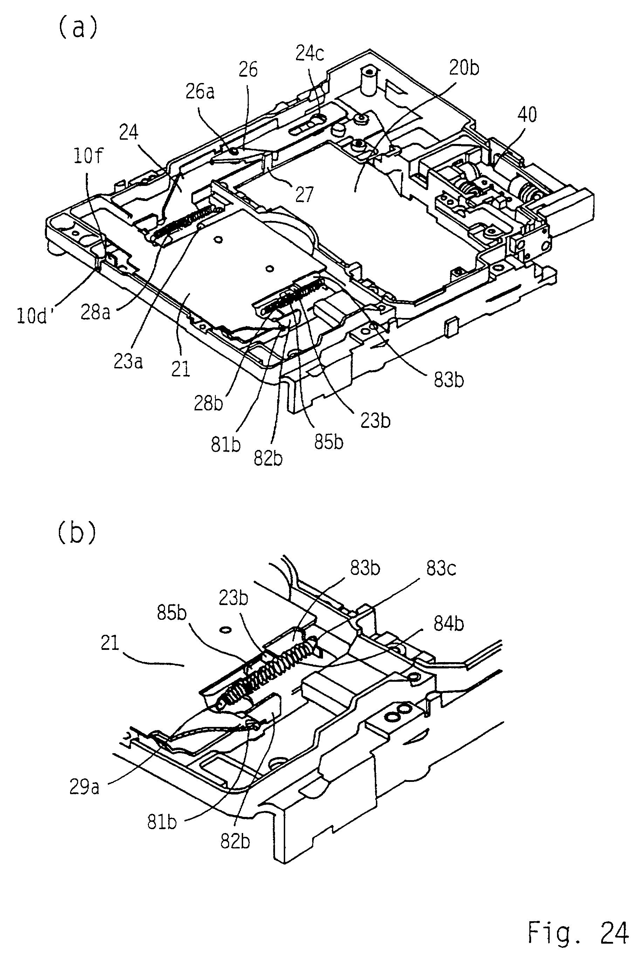

Fig. 24(a) illustrates the condition of the apparatus when the optical disc is loaded, while Fig. 24(b) is an enlarged view of the essential portion.

On the load plate 24 the metal plate 21 is mounted, with deposition of the slide pins 29a, 29b, projections 83c, 83d of the load plate 24 and coil springs 28a, 28b with both ends coupled while these are compressed (normal condition).

In this case, the slide pins 23a, 23b of the metal plate 21 are coupled with the guide holes 84a, 84b. In addition, it can also be seen that the curved pieces 81a, 81b of the metal plate 21 are located at the lower side of the slope of the third guides 82a, 82b.

The carriage lock 26 provided on the load plate 24 is projected toward the aperture 20b of the drive base 20. In more detail, a part of the carriage lock 26 made of plastic material is pressed to the projection 27 with a coil spring 26a energized to rotate toward the projection 27 of the drive base 20 and the end part of the carriage lock 26 is projected toward the aperture 20b of the drive base 20 to be engaged with the end part of the coil assembly 32a of the lens carriage 30 to be moved in the radius direction of the optical disc, in view of preventing movement of the lens carriage 30.

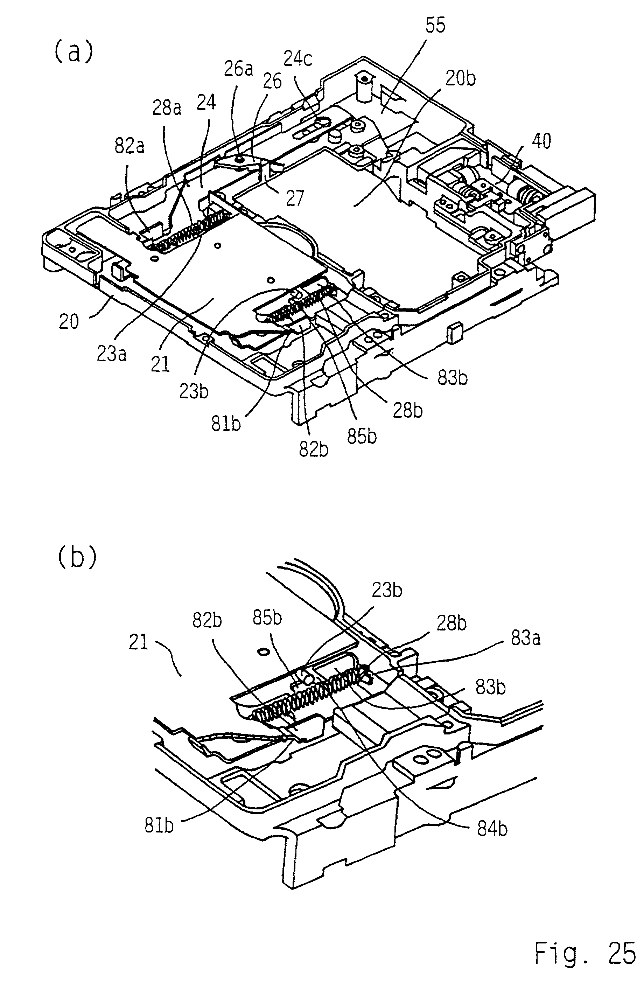

Fig. 25(a) is a diagram illustrating the condition of the apparatus when the optical disc is unloaded, while Fig. 25(b) is an enlarged view of the essential portion.

With the eject instruction explained above, the load plate 24 moves to the rear side of the apparatus. This movement causes the slide pins 29a to 29c provided on the drive base 20 to move within a plurality of grooves 24a to 24c provided within the load plate 24. Moreover, with the movement of the load plate 24, the slide pins 23a, 23b of the metal plate 21 slide on the slopes of the guide holes 84a, 84b and ride over the flat surfaces of the second guides 85a, 85b to push upward the metal plate 21. Thereafter, when the optical disk is loaded, the slide pins 23a, 23b of the metal plate 21 slide for the specified mount and are then returned to the guide holes 84a, 84b, with the returning forces of the coils springs 28a, 28b.

In the same manner, when the load plate 24 moves, the curved pieces 81a, 81b of the metal plate 21 slide on the slopes of the third guides 82a, 82b and the curved pieces 81a, 81b of the metal plate 21 move upward a little with upward movement of the metal plate 21 near the turn-table 22. A part of the metal plate 21 in front of the apparatus is provided for pushing upward the turn-table and is not required to be pushed upward so much. Therefore, the slide pins 23a, 23b explained above are not used to this part.

Thereafter, the curved pieces 81a, 81b are also returned to the initial positions with the returning forces of the coil springs 28a, 28b.

With the mechanism as explained previously, when the metal plate 21 moves upward, the turn-table 22 holding the optical disc moves upward through the aperture 20a of the drive base 20 to draw back from inside of the cartridge holder and the cartridge accommodating the optical disc is pressed toward the wall surface of the drive base 20 around the aperture 29a. Thereby, engagement between the optical disc and turn-table 22 is canceled. The cartridge eject mechanism of the cartridge holder 71 explained later ejects or unloads the cartridge to the outside of the apparatus.

### Cartridge holder

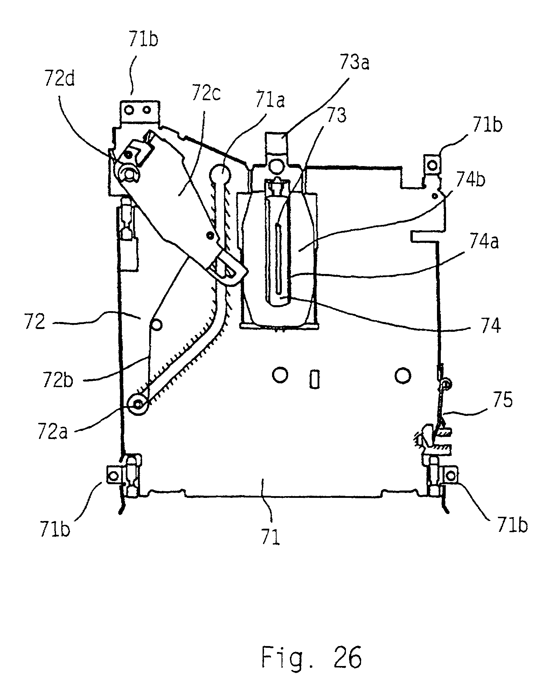

Fig. 26 is an enlarged view of the cartridge holder. The cartridge holder 71 is formed by press work of the stainless steel or the like. A cartridge transfer/eject mechanism 72 is constituted by roller 72a which is engaged with an aperture 71a of the cartridge holder 71 to move therein to open or close the shutter of the optical disc cartridge, coil spring 72b for energizing the roller 72a in the cartridge eject direction and coil spring 72d for energizing the rotatable arm 72c in the cartridge eject direction. The rotatable arm 72c has a gear therein to provide the mechanism to alleviate elastic force of the coil spring 72d and adjust an cartridge eject force in order to prevent the cartridge to be exhausted forcibly.

In addition, an electromagnet unit 73 is also provided at the position near the center of the cartridge holder 71 and in opposition to the light beam from the objective lens L. The electromagnetic coil assembly is composed of an angular lead (ribbon lead) type copper foil slice coil, which is covered with an insulation seal 74a and a cover 74b. The angular lead (ribbon lead) type coil is successfully used to reduce heat generation and prevents temperature rise within the apparatus.

Moreover, there is also provided a cartridge clamp 75 which is engaged with the end part of the optical disc cartridge and is energized, by the coil spring, at the internal side of the cartridge holder 71 to clamp the cartridge 400 to the other wall surface of the drive base 20.

The cartridge holder 71 mounting the parts explained above is screwed to the drive base 20 through a plurality of threaded holes 71a, 71b.

Further, a terminal 73a of the electromagnet unit 73 formed like a plate spring is exposed at the rear surface side of the cartridge holder 71 provided opposed to the printed circuit board 11 and the cartridge holder 71 and printed circuit board 11 are stacked so that such terminal 73a is placed in contact with the land of the printed circuit board 11. It is then screwed to the part near the terminal 73a of the electromagnet unit 73 as a measure for preventing warpage of the printed circuit board 11.

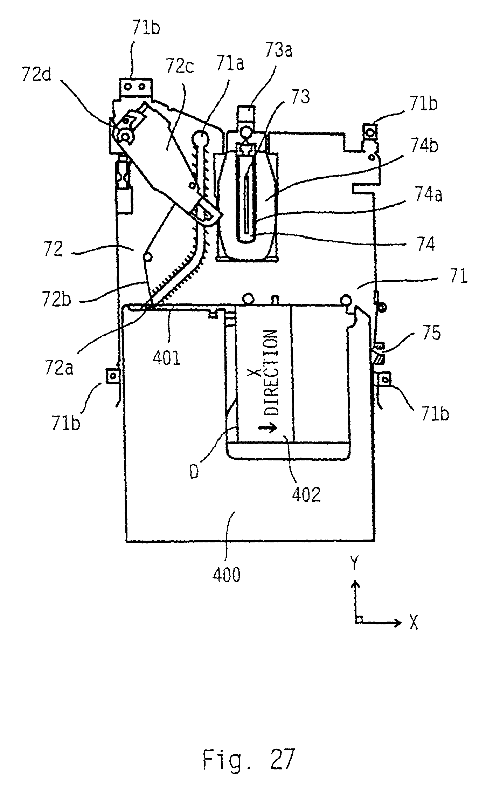

Fig. 27 shows the condition that the optical disc cartridge 400 is normally inserted and exhausted. The roller 72a engages with the end surface of the slider 401 of the optical disc cartridge 400 and the roller 72a moves on the aperture 71a, upon insertion/ejection of the cartridge, to open or close the shutter 402 coupled with the slider 401.

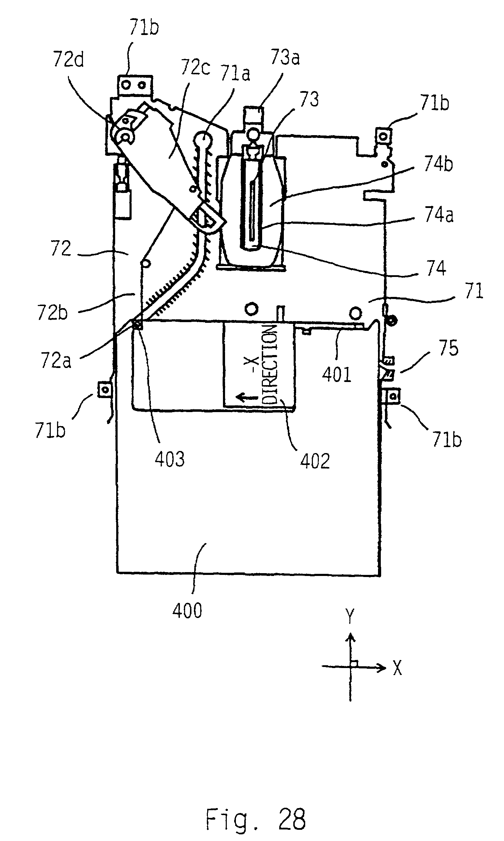

Fig. 28 illustrates the condition that the cartridge 400 is inversely inserted. In this case, the roller 72a is coupled with the groove 403 provided on the cartridge 400, it cannot move in the groove 71a if the groove 403 is pushed, and the cartridge 400 is exhausted to the outside with a reactive force of the coil spring 72b.

However, in some cases, the cartridge 400 is pushed by a user, although it is inserted erroneously, for the positioning. In this case, the roller 72a can be worn out, resulting in breakdown. When a force required for opening and closing operation of the shutter is usually set to several tens of gram, a bending force due to the erroneous insertion to be applied to the roller 72a may be increased, depending on a user, up to several kilograms.

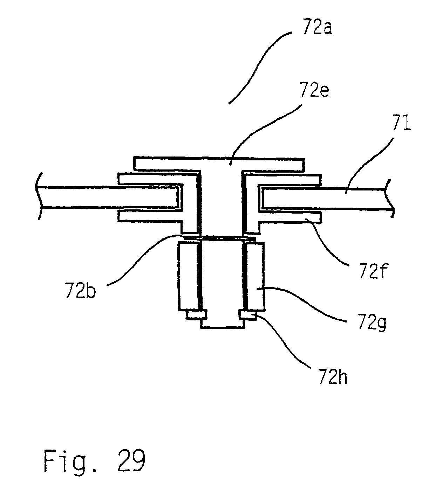

Therefore, Fig. 29 illustrates a practical structure of the roller 72a. The roller 72a is constituted by a slide means 72f sliding along the wall of the groove 71a of the cartridge holder 71, a rotating shaft 72e at the center of the slide means 72f, a rotating means 72g for engagement with the slider 401 of the cartridge 400 and a stopper means 72h for controlling the rotating means 72g. In view of improving durability of the roller 72a, the rotating shaft 72e is constituted by a metal material such as aluminium and stainless or the like, while the other slide means 72f, rotating means 72g and stopper means 72h are formed of a resin such as polyacethal resin or plastic material having good sliding property. Moreover, a part of the coil spring 72b is attached between the rotating shaft 72g and slide means 72f.

Although it is possible to form every parts other than the rotating shaft 72e of a metal material in order to improve durability of the roller 72, if a metal material is used for the sliding portion, the sliding portion may be worn, though depending on the surface condition and operation frequency of the sliding portions (rotating shaft 72e, sliding portion 72f, rotating portion 72g and stopper means 72h), disabling smooth opening and closing operations of the shutter. However, smooth sliding operation can be assured by coating a resin having the good sliding property such as teflon coat to the sliding portion or impregnating a lubricant to the sliding portion and thereby the roller 72a can be constituted by the metal material as explained above.

Therefore, durability of roller 72a can be much improved by introducing the constitution as explained above.

### FPC of fixed optical system

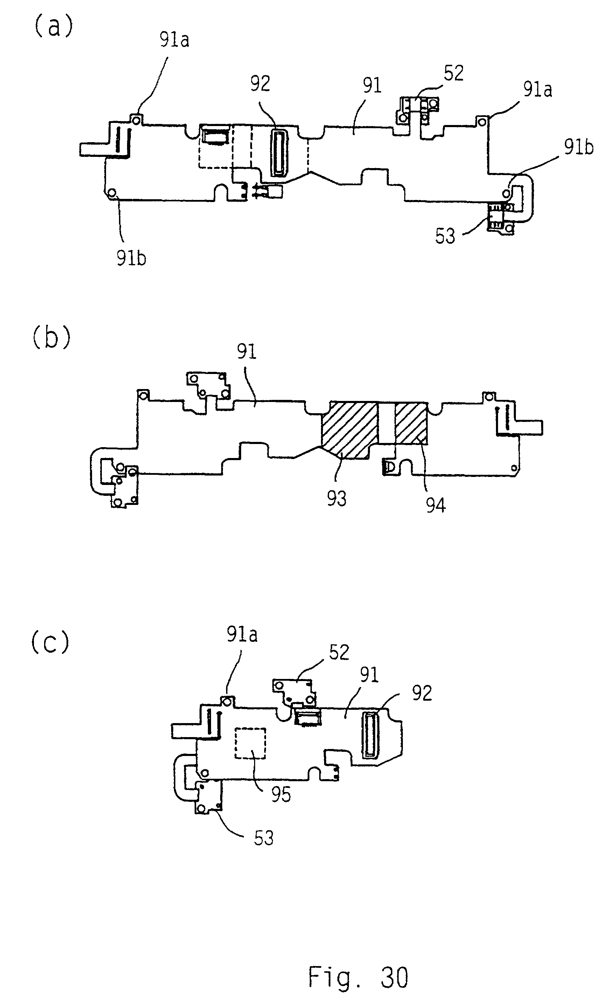

Figs. 30(a) to 30(c) illustrate the flexible printed circuit board (FPC) for transferring the signals of the fixed optical system. On this FPC 91, circuit parts such as head IC 95 for controlling servo signal, information signal of optical system and laser diode and the photodetectors 52, 53 are mounted.

Fig. 30(b) illustrates the rear surface side of Fig. 30(a). At the rear surface where a plug-in connector 92 is provided in the FPC 91, a film having a certain hardness and sheets 93, 94 are attached with the bonding agent or the double-sided bonding tape. Therefore, the plug-in connector 92 can be pressed easily, enabling easier assembling work and giving much contribution to the working efficiency on the occasion of connecting this connector 92 to the connector 92' in the side of the printed circuit board 11.

Fig. 30(c) illustrates the condition that FPC 91 is bent so that the plug-in connector 92 is exposed at the surface. Therefore, the mounting area of FPC 91 can be reduced, enabling the screwing thereof to the space 20i of the drive base 20 via the threaded holes 91a, 91b.

In addition, FPC 91 is arranged in the space 20i of the drive base 20, thus facilitating connection to the printed circuit board 11, giving much contribution to improvement in the assembling work efficiency. Moreover, mixture of external noise into the signals for recording, reproducing and erasing operations can be prevented by connecting the wirings for transferring the signals taking part in the information recording or reproducing operations with the plug-in connector without laying the wirings to the outside of the drive base 20 between the drive base 20 and printed circuit board 11. Accordingly, it is possible to realize the apparatus having higher reliability as the data storing apparatus.

Meanwhile, the shielding effect can be obtained and mixture of external noise can also be prevented by holding the wirings between the printed circuit board 11 and drive base 20 using the plug-in connector 92 and then covering it with the frame 12. Therefore, the apparatus having excellent reliability as the data storing apparatus can be attained.

### Other embodiments

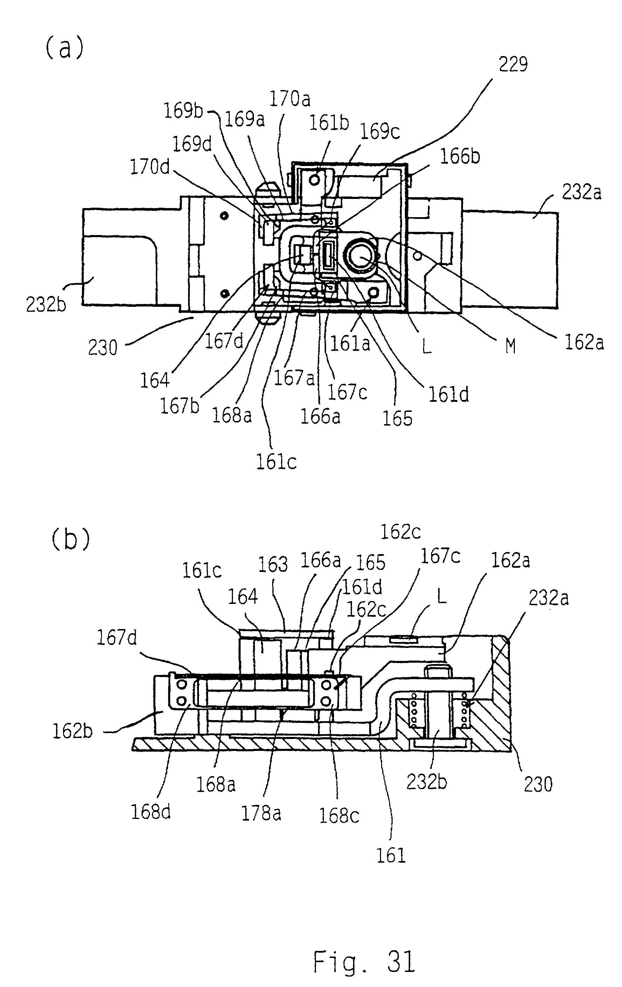

Other embodiments of the lens carriage and lens actuator explained with reference to Fig. 17 and Fig. 18 will then be explained by referring to Fig. 31.

In Fig. 31, a space is formed at the center area of the lens carriage 230 to move the objective lens L in the radius direction of the optical disc in order to mount a cover glass for inputting and outputting the optical beam for the fixed optical unit 40, a raising mirror M for raising the optical beam from the cover glass for 45 degrees, an objective lens L and lens actuator 160, etc.

At both sides of the lens carriage 230, the coil assemblies 232a and 232b are provided. A movable part of the actuator 160 is constituted by the lens holding means 162 made of thermosetting resin or the like to movably hold the objective lens L in the track direction and focus direction, the focus coil 165 provided in close contact with the wall of the center aperture of the lens holding means 162a and track coils 166a, 166b provided in close contact with the opposite surface of the bonding part explained above of the focus coil 165.

A couple of track coils 166a and 166b provided at the right and left sides of the focus coil 165 are wound in such a direction as almost perpendicular to the winding plane of the focus coil 165 and the end portions thereof are protruded to the outside from the end surface of the yoke 163 of the magnetic circuit. That is, influence of the magnetic flux can be eliminated not to generate mechanical oscillation by locating the part extending to the upper and lower directions at the outside of the magnetic gap of the track coils 166a and 166b at the position outside the magnetic gap.

Moreover, a magnetic circuit of the actuator 160 is constituted by a magnet 164 provided on the actuator base 161 opposing to the track coil 165 at the center aperture of the lens holding means 162a in the movable side, a yoke 161c consisting of a bending portion of the actuator base 161 receiving a magnetic force of the magnet 164 and a yoke 163 provided on such two yokes.

Moreover, there are provided six wire assemblies 167a, 168a, 169a, 170a, 178a (one is not illustrated) for holding the movable portion of the actuator 160, terminal boards 167c, 168c, 169c (one is not illustrated) which are bonded after engaging the holes to the projection 162c of the lens holding means 162a to hold the end portion of the wire assembly in the side of the objective lens and the terminal boards 167d, 168d, 169d and 170d to be bonded to the wire holding means 162c fitted to the end portion of the actuator base 61. The vibration absorbing members 167b, 169b (two members are not illustrated) for absorbing vibration of the wire assemblies are also provided.

However, the terminal board 168c and the terminal board (coupled with the wire assembly 170a) in the opposite side of the lens holding member have two wire assemblies at the upper and lower sections and two wire assemblies are coupled with only one terminal board. In addition, the wire assemblies may be formed, like the embodiment explained previously, in the vibration absorbing structure where the surrounding is covered with the bonding layer, vibration absorbing member or the like.

The end portion of FPC 39a is extended on the wire holding means 162b and is then soldered to four terminal boards on the wire holding means 162b. Moreover, the four terminal boards on the lens holding means 162 are soldered respectively to the two lead wires of the focus coil 165 and track coils 166a, 166b. As explained above, continuity among the focus coil 165, track coils 166a, 166b and FCP 39a has been established. Therefore, since electrical connection can be made without laying fine lead wires of each coil, there is no fear of disconnection of wirings and higher reliability can also be attained.

Furthermore, the six wire assemblies and terminal boards at both end portions of each wire assembly may be manufactured by the press work for the plate spring material and linear spring material using a die consisting of a pair of right and left wire assemblies coupled with each other. The right and left wire assemblies are mounted to the wire holding means 162b while these are coupled (in the shape of inverted C) and thereafter the coupling portion is disconnected. Accordingly, use of such wire assemblies makes easier the handling and management of small size parts, thereby much improving the assembling efficiency.

Therefore, the actuator base 161 can be screwed via the spring 223a with the screw 223b at the fitting portions 161a, 161b of the bending piece thereof and the lens carriage 230 under the condition of mounting all parts of the actuator 160 explained above.

### Dimensions of each part of apparatus

In this embodiment, constitution of each part has been explained in order to set the height of the optical memory apparatus to about 24 mm or less, that is, to about 17 mm.

According to the optical memory apparatus which performs recording and reproducing operations for the 3.5-inch magneto-optical disc cartridge explained above, following dimensions can be realized by constituting the apparatus with the parts explained above.
(1) Thickness of only substrate of the printed circuit board 11: About 0.8 mm (the circuit parts in maximum height of about 4.5 mm can be mounted because the allowable height of the space 20i of the drive base 20 is about 4.5 mm)
(2) Maximum height of cartridge holder 71: About 7.1 mm
(3) Maximum height of the drive base 20: About 15.8 mm (height of cartridge accommodating means is about 9.7 mm; height of turn-table unit accommodating means is about 6.0 mm; maximum height of head base is 6.4 mm; maximum height of eject motor is about 10.7 mm/minimum height is about 9.7 mm, including the thickness of drive base which is set in the range of 0.8 to 1 mm) (Width: about 100.2 mm, maximum depth: about 132.2 mm)
(4) Thickness of the center area of lens carriage: 7.0 mm (depth: about 22.2 mm)
   Thickness of lens carriage 30 including coil assembly and VCM is about 7.6 mm; Thickness of only VCM: about 4.5 mm
(5) Total height of turn-table unit 222: About 5.8 mm (thickness of only metal plate is about 0.6 mm)
(6) Thickness of cover 13: 0.2 mm
(7) Maximum thickness of load plate: 4.7 mm (Above dimensions include the tolerance of ± 0.1 mm.)

Thereby, since thickness of driver base can be set to about 15.8 mm, considering constitution and layout parts, the total height of apparatus mounting the printed circuit board and cover on the drive base can be reduced to about 17 mm.

Moreover, the width of 102 mm and depth of 140 mm including the printed circuit board and front bezel, etc. have been attained. (In more detail, 17.2 (height) x 101.6 (width) x 100 mm (depth) has been achieved.) Therefore, the apparatus can be built into the slot of the thinner floppy disc apparatus measuring the thickness of about 17 mm, width of 102 mm and depth of 140 mm.

### Weight of each part of the apparatus

Each constitution has been explained in this embodiment to reduce the total weight of the optical memory apparatus to about 300 g or less.

According to the optical memory apparatus for the recording and reproducing operation of the 3.5-inch magneto-optical disc cartridge as is explained in this embodiment, the total weight of the apparatus can be reduced to about 250 g by setting the weights of each principal section to the following weight through reduction in thickness of apparatus, saving in the number of parts and simplification of the parts.
(1) Total weight of printed circuit board: About 40 g (including the circuit parts)
(2) Total weight of cartridge holder 71: About 50.2 g (including dust-proof sheet)
(3) Total weight of lens carriage 30: About 36.7 g (including VCM, etc.)
(4) Total weight of cover 13: About 19.8 g
(5) Total weight of turn-table unit: About 18.3 g
(6) Total weight of driver base 20: About 66.5 g (including load plate, LD unit, etc.)
(7) Total weight of eject motor unit: About 10 g

Moreover, the total weight of the apparatus where a frame 12 and a front bezel 10, etc. are included as the option can be reduced to about 299 g.

In this embodiment, the optical memory apparatus of the magneto-optical disc cartridge has been explained but it is of course possible to introduce the technology for realizing thinner, light weight and small size apparatus which has been explained in this embodiment into the optical memory apparatus such as the 3.5-inch phase variable type optical disc accommodated in the cartridge.

### System constitution

An embodiment for utilizing the optical memory apparatus explained above, particularly the magneto-optical disc apparatus in the computer system will be explained.

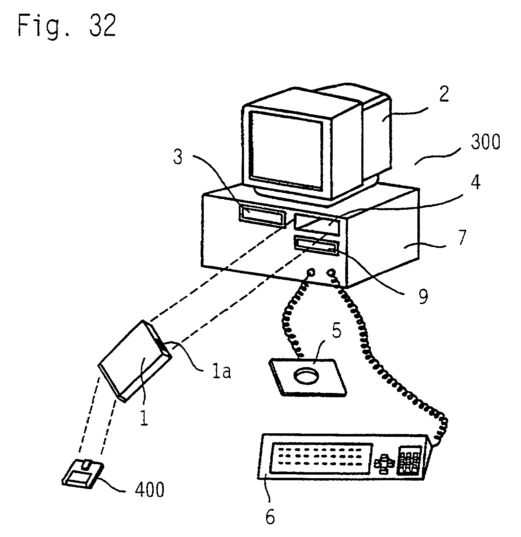

Fig. 32 is a system constitution diagram. A personal computer 300 is mainly composed of a display 2, a mouse 5, a computer body 7 and a keyboard 6.

The computer body 7 comprises a floppy disc apparatus 3, a CD-ROM optical disc apparatus 9 and a memory apparatus such as a magnetic disc apparatus not illustrated. Moreover, a magneto-optical disc apparatus 1 having the constitution explained above is inserted into a slot 4 which is a cavity part of the computer unit 7 and designed a little larger than the disc apparatus and the connector 1a for E-IDE interface of the magneto-optical disc apparatus 1 is connected to the connector not illustrated within the slot 4.

The memory apparatus explained above uses a portable type recording medium, except for the magnetic disc apparatus and exposes a part of the mechanism to insert or eject the medium at the outside thereof. Such a personal computer 300 is driven when the power switch is turned ON and reads the operation systems and applications from the preset memory apparatus and then executes these softwares.

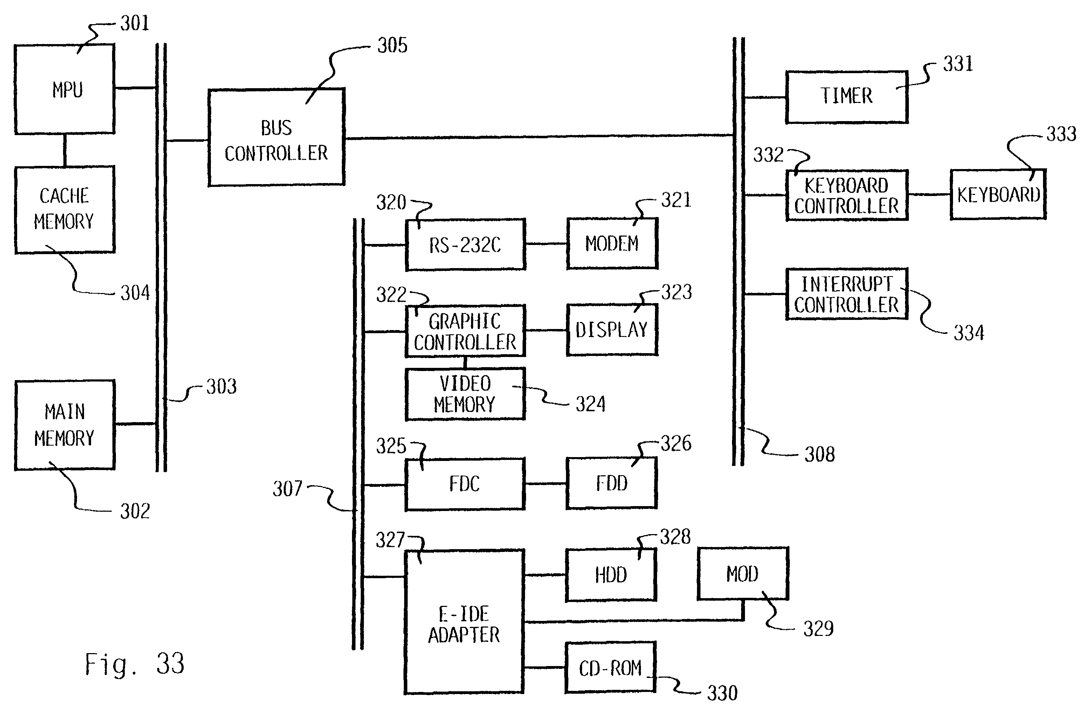

Fig. 33 is a schematic diagram illustrating the internal structure of system. A microprocessor (MPU) 301 is the heart of the personal computer to process the programs and data stored in the main memory 302. Data transfer between MPU 301 and main memory 302 is carried out by an internal bus 303. A cache memory 304 uses a memory element which can make access at a higher rate than the main memory 302 to preferentially stores the data having the higher application frequency. A bus controller 305 is connected to an internal bus 303 for the data transfer with the internal bus 307 or 308.

Next, the internal bus 307 is capable of connecting directly the external devices. This internal bus 307 is connected with the modem 321 via an RS-232C interface 320, with the display 323 via a graphic controller 322 and video memory 324 and with floppy disc apparatus (FDD) 326 via a floppy disc controller (FDC) 325, respectively.

The internal bus 307 is further connected with a magnetic disc apparatus (HDD) 328, a magneto-optical disc apparatus (MOD) 329, an a CD-ROM optical disc apparatus (CD-ROM) 330 via an E-IDE adapter. The E-IDE interface is an extended version of IDE interface which are all general standard interfaces.

In succession, the internal bus 308 is used for interrupt control and is connected with a keyboard controller 332 connected with the timer 331 and keyboard 333 and an interrupt controller 334.

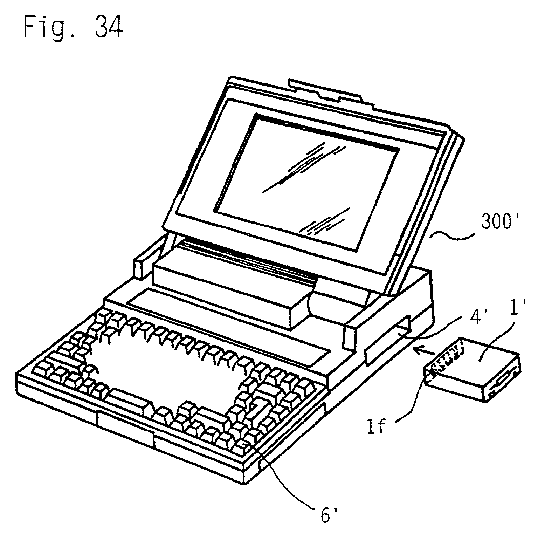

Moreover, Fig. 34 illustrates an example of laptop type computer 300' having a keyboard 6', a floppy disc apparatus of about 17 mm high or a slot 4' to which a power supply unit can be inserted.

The magneto-optical disc apparatus 1 explained above can be reduced in size as described in regard to the embodiment. Therefore, it can be set to almost the same size as the external shape of the floppy disc apparatus of about 17 mm height and can be used through insertion into the slot 4'.

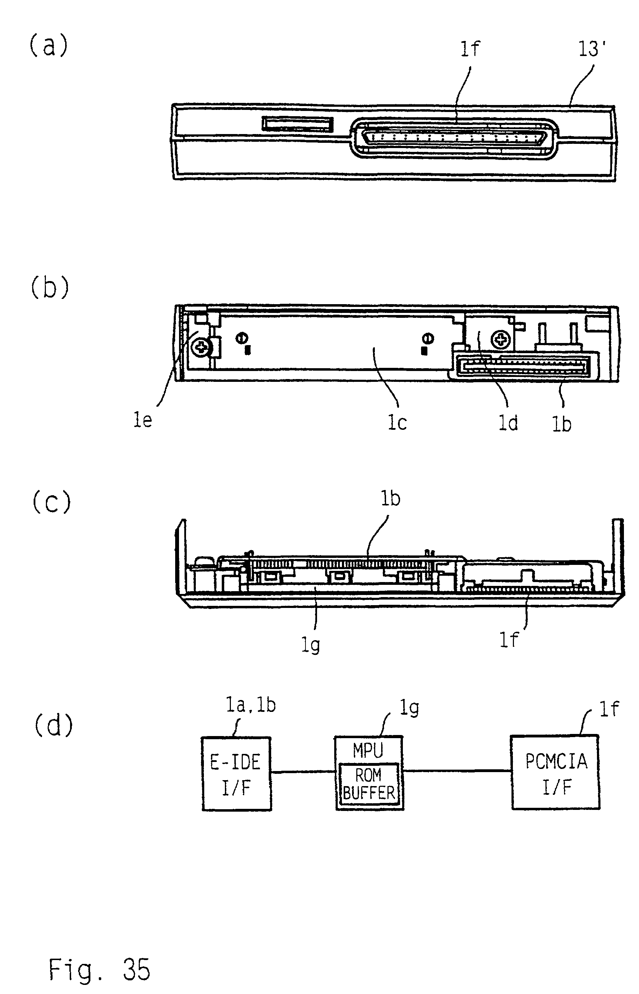

Here, as shown in Fig. 35(a), an external case 13' is further provided to the external circumference of the drive base 20 and cover 13 to the magneto-optical disc apparatus 1 until it becomes equal in size to the slot 4' in order to adjust the engagement with the slot 4'.

### Interface

The interface of the laptop type computer 300' in this embodiment is different in some cases from the interface of the magneto-optical disc apparatus 1 of the embodiment explained above. Therefore, since it is impossible to simply connect them, a converter is then provided at the inside of the case 13' as shown in Figs. 35(a) to 35(b).

In more detail, the magneto-optical disc apparatus 1 of the embodiment explained above uses the connector 1a for E-IDE, but since the interface of the laptop type computer 300' in this embodiment is the PCMCIA type, various signals outputted from the connector 1a for E-IDE are converted to the signals for PCMCIA.

Therefore, the connector 1b to which the connector 1a for E-IDE is connected in opposition when the magneto-optical disc apparatus 1 is accommodated in the case 13' is provided in the case 13'.

Moreover, FPC1c for guiding the signals from the connector 1b is screwed for the fixing purpose to the metal plates 1d, 1e attached to the case 13'. In addition, the signals are transferred from FPC1c to IC chip 1g accommodating MPU and ROMBUFFER, etc., the signal for E-IDE is converted to the signal for PCMCIA and is then transferred to the connector if of the other end side and the signal for PCMCIA is then converted to the signal for E-IDE on the contrary. The connector if is projected to the outside from the case 13' and it can be connected to the PCMCIA of the interface of the laptop type computer 300'.

Therefore, the optical memory apparatus can be connected to many host apparatuses by changing only the case depending on the users' request.

### Examples of other interfaces

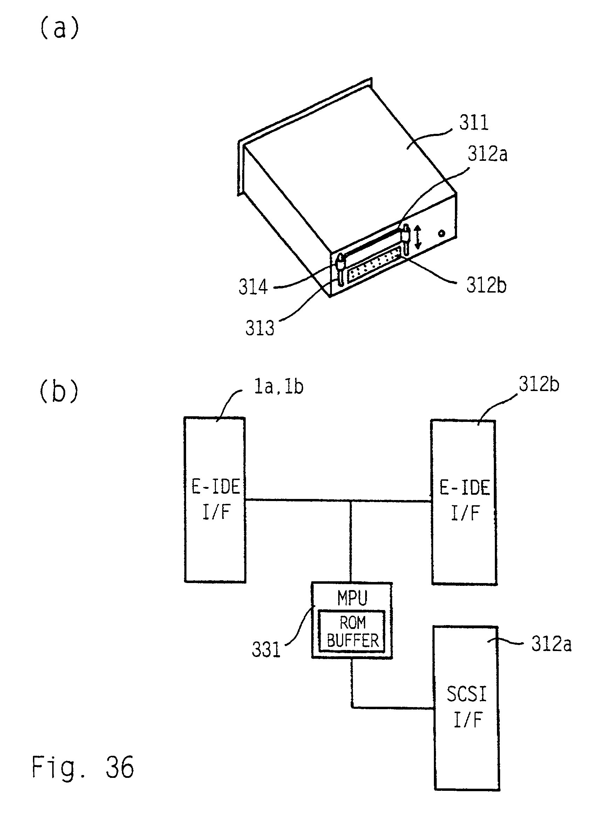

Figs. 36(a), 36(b) illustrate unit constitution of the optical memory apparatus of the second embodiment. In Fig. 36(a), the magneto-optical disc apparatus 1 explained in regard to Fig. 1 is further accommodated in the case (accommodation cabinet) 311 and two kinds of SCSI connector 312a and E-IDE connector 312b are projected to the outside of the case 311.

The slide plate 314 opens one of two kinds of connectors and closes the other connector not used. A longer pin 313 is provided in both sides of the slide plate 314 and this pin moves between connectors provided at the upper and lower sides. For use of the upper connector, the slide plate 314 is moved upward and is then fixed with a screw or pin not illustrated.

In Fig. 36(b), the SCSI connector 312a and E-IDE connector 312b divides the signal lines for guiding the signals of the EIDE connector 1a of the magneto-optical disc apparatus 1 into two sections. Thereby, one is used in direct for E-IDE, while the other is connected to the IC chip 331 accommodating MPU and ROM-BUFFER, etc., so that the signal for E-IDE is converted for SCSI and the signal for SCSI is converted for E-IDE, on the contrary.

Case and kinds of interface connectors for optical memory apparatus such as SCSI, E-IDE, PCMCIA connectors can be selectively attached to the magneto-optical disc apparatus considering applicability and users' request.

Therefore, connectability of the optical memory apparatus having a certain specification with host apparatus such as many kinds of personal computers can be improved only by changing the case.

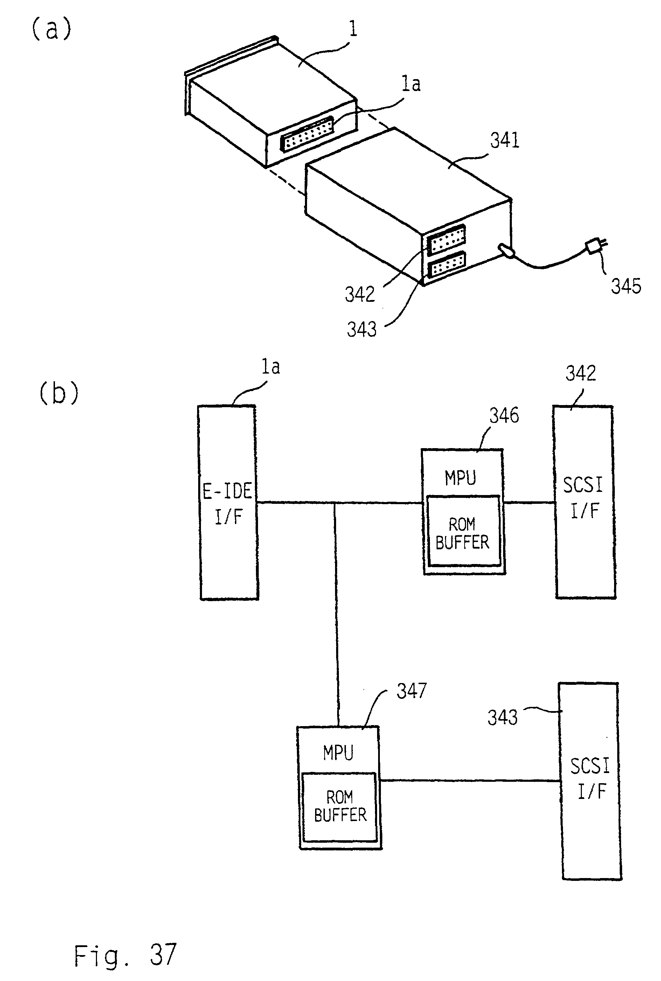

Figs. 37(a), 37(b) illustrate a constitution of unit of the optical memory apparatus of the third embodiment. The magneto-optical disc apparatus 1 has a connector 1a for E-IDE. The magneto-optical disc apparatus 1 can be connected to the conversion connector not illustrated in the case 341 by inserting it to the case 341 having the SCSI connector 342 other than E-IDE connector, PCMCIA connector 343 and adapter 345.

The IC 46 accommodating the MPU, ROM-BUFFER, etc. which are conversion circuits coupled with the conversion connector converts the signal for E-IDE to the signal for SCSI and the signal for SCSI to the signal for E-IDE in order to connect the signals to the host apparatus such as personal computer body 300 and laptop type computer 300' via the SCSI connector.

Signal conversion at the interface explained above is performed by conversion of the corresponding signals using the data indicating corresponding relationship between the E-IDE signal content and terminal number and between the SCSI signal content and terminal number. Signal content and terminal number of the interface connector used are generally known.

A simple conversion example will be indicated. For instance, the pin No. 1 indicates RESET for E-IDE type, GROUND for PCMCIA type and GROUND for SCSI type. Therefore, since information is different depending on the pin number, for transmission of GROUND, conversion is made so that the signal of the pin No. 2 for E-IDE type is transferred to the pin No. 1 for PCMCIA type and to the pin No. 1 for SCSI type.

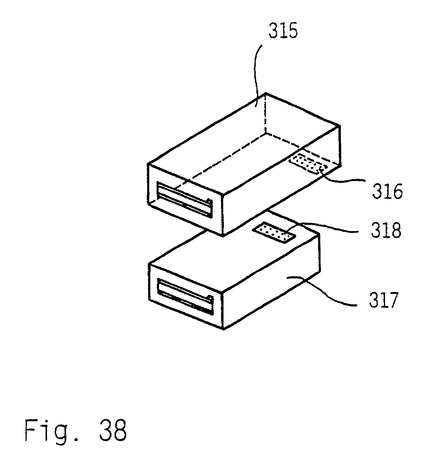

Fig. 38 illustrates a constitution of unit of the optical memory apparatus of the fourth embodiment. In this embodiment, the connectors 316, 318 which may be connected with each other are provided, in this embodiment, at the position where the cases 315 and 317 are provided opposed with each other when the cases 315, 317 of two units of memory apparatus are stacked for the arrangement.

Connection of connector can be made, without providing or laying the cables, only by stacking two units of memory apparatuses in the vertical direction. In this embodiment, the optical memory apparatus is considered as an example, but connection, for example, between the hard disc apparatus and magneto-optical disc apparatus can be made by using in common the interface connectors of those to be connected and thereby direct transfer of data between such apparatuses can be realized.

Moreover, application into the data transfer between hard disc apparatus and floppy disc apparatus other than the optical memory apparatus is also possible.

Accordingly, connection of connectors in the right and left direction may also be realized only by exposing the connectors not only in the vertical direction but also in the horizontal direction. In addition, the connectors are provided, in this embodiment, at the upper and lower surfaces of the apparatus, but two or more apparatuses can be connected by providing the connectors at the upper and lower surfaces.

### Effect of the Invention

As explained previously, the present invention offers a thinner, small size, light weight and compact optical memory apparatus which has remarkably improved assembling work efficiency as described above.

Moreover, the present invention can also offer the optical memory apparatus which has also improved higher reliability without lowering capability as the data memory apparatus even after reduction in thickness, size and number of parts.

Therefore, the present invention can offer, through reduction in thickness, size and weight of apparatus, the optical memory apparatus which can be mounted into a portable and thinner laptop type personal computer. In addition, the present invention can offer the optical memory apparatus which can be loaded to the slot of the apparatus in the thickness of 1-inch or less, namely of about 17 mm of the computer system.

The present invention can further offer the optical memory apparatus in which the height of the drive base is approximated as much as possible to the thickness of the optical disc cartridge (6.0 ± 0.2 mm, conforming to 3.5-inch optical disc cartridge of ISO standards).

Accordingly, the present invention enables mounting and connection of optical memory apparatus into many host apparatuses to expand the application mode thereof into wider range and improve flexibility thereof.

### List with important reference numerals

- 13:: Cover;
- 10:: Front bezel;
- 11:: Printed circuit board;
- 20:: Drive base;
- 24:: Load plate;
- 30:: Lens carriage;
- 40:: Fixed optical unit;
- 40a:: Shielding cover;
- 71:: Cartridge holder;
- 222:: Turn-table unit;

## Claims

1. An optical memory apparatus which receives and reads data from an optical memory medium, comprising:
an optical head having a fixed optical part (40) and a movable optical part;
a base (20)
a carriage (30) movably mounted on said base and carrying said movable optical part;
a light emitter (42) mounted on said base;
**characterized by**
said base (20) having a recess therein comprising a unitary and integral optical component mounting portion having a precision mounting surface therein for mounting thereon an optical component of the fixed optical part and a side wall having a portion at an edge of said base, the side wall defining a boundary of said recess and having an opening therein;
a holding member holding a corresponding component of said fixed optical part on the precision mounting surface; and
a photo-detector mounted on said sidewall and a light beam passing through said opening to the photodetector.

2. The optical memory apparatus of claim 1, wherein:
said base has an optical memory medium holding portion which receives and holds an optical memory medium: and
the recess of said base is displaced laterally from the optical medium holding portion.

3. The optical memory apparatus of claim 1 or 2, further comprising a cover (40a) covering the recess of said base.

4. The optical memory apparatus of any of claims 1 to 3, wherein the side wall has a second opening therein and said light emitter (42) is mounted on the second opening.

5. The optical memory apparatus of any of claims 1 to 4, wherein:
said base has a further recess in which said carriage (30) is movable and an internal side wall; and
the internal side wall defines the further recess and the further recess has a second opening therein for introducing a beam emitted from said light emitter (42) to said movable optical part.

6. The optical memory apparatus of any of claims 1 to 5, wherein:
said light emitter (42) supplies a light beam to the fixed optical part through a first opening in an associated said sidewall, the fixed optical part (40) transmitting the beam through a second opening in an associated interior sidewall to the movable optical part mounted on said carriage for scanning an optical memory medium with the beam and, further, the fixed optical part receiving a light beam reflected from the optical memory medium through the second opening and transmitting the received reflected beam through a third opening in an associated sidewall surrounding the first recess;
said photo-detector is mounted on said base adjacent the third opening in the associated sidewall and receiving and detecting the beam transmitted from the fixed optical part (40) through the third opening.

7. The optical memory apparatus of any of claims 1 to 6, further comprising an eject motor (50) mounted on said base, said eject motor (50) is a flat box type motor.

8. The optical memory apparatus of any of claims 1 to 7, wherein said base (20) further comprises a unitary and integral second recess and said eject motor (50) mounted within the unitary and integral second recess.

9. The optical memory apparatus of claim 8, wherein:
said base has a medium holding portion which receives and holds an optical memory medium: and
the first and second unitary and integral recesses of said base are displaced from the medium holding portion.

10. An optical memory apparatus of any of claims 1 to 9, wherein:
said carriage is mounted on said base for movement along a seek direction and carrying said movable optical part,
said light emitter emits a beam in a direction substantially perpendicular to the seek direction, and further comprises;
a first fixed optical component reflecting a beam emitted from said light emitter to said movable optical part and further reflecting a beam, reflected from the optical memory medium, in a direction substantially perpendicular to the seek direction,
a second fixed optical component receiving the beam reflected from said first fixed optical component and separating therefrom a data signal component and a servo signal component,
a first photo-detector (52) receiving and detecting the data signal component, and a second photo-detector (53) receiving and detecting the servo signal component;
the first and second detectors mounted on the sidewall of the base.

11. The optical memory apparatus of claim 10, wherein:
said first fixed optical component (44) comprises a beam reflector prism; and
said second fixed optical component (45) comprises a beam splitter and a Wollaston prism.

12. The optical memory apparatus of any of claims 10 or 11, further comprising:
a third fixed optical component (48) mounted in the recess between said second fixed optical component and said second photo-detector (53) and receiving a beam from said second fixed optical component (45) and separating therefrom and outputting a first servo signal component and a second servo signal component.

13. The optical memory apparatus of any of claims 10 to 12, wherein said second photo-detector (53) has a flat surface and further comprises:
a first detector element mounted on the flat surface and detecting the first servo signal component; and
a second detector element mounted on the flat surface and detecting the second servo signal component.

14. An optical memory apparatus of any of claims 1 to 13,
wherein the fixed optical part (40) comprises a plurality of components, the base (20) comprises plural precision surfaces, and each component, of the plural components of the fixed optical part, is engaged directly with a respective precision surface and thereby is optically aligned with a next adjacent component.

15. An optical memory apparatus of any of claims 1 to 14, wherein said holder members include a plate spring (111) for pressing an optical component of the fixed optical part (20) to a wall surface of the recess and said plate spring is fixed to a wall of the base.

16. An optical memory apparatus of any of claims 1 to 15, wherein said optical component includes an optical component (48) arranged in a clearance between wall surfaces of the base (20).

## Patentansprüche

1. Optische Speichervorrichtung, welche Daten von einem optischen Speichermedium empfängt und liest, mit:
einem optischen Kopf mit einem fixierten optischen Teil (40) und einem bewegbaren optischen Teil;
einer Basis (20);
einem Wagen (30), der bewegbar an der Basis montiert ist und den bewegbaren optischen Teil trägt;
einem Lichtemitter (42), der an der Basis montiert ist;
**gekennzeichnet durch**
die Basis (20), die eine Vertiefung darin mit einem einheitlichen und einteiligen Montageabschnitt für eine optische Komponente aufweist, der eine Präzisionsmontagefläche darin zum Montieren einer optischen Komponente des fixierten optischen Teils daran und eine Seitenwand mit einem Abschnitt an einem Rand der Basis hat, wobei die Seitenwand eine Begrenzung der Vertiefung definiert und eine Öffnung darin aufweist;
ein Halteglied, das eine entsprechende Komponente des fixierten optischen Teils an der Präzisionsmontagefläche hält; und
einen Photodetektor, der an der Seitenwand montiert ist, und einen Lichtstrahl, der **durch** die Öffnung zum Photodetektor hindurchgeht.

2. Optische Speichervorrichtung nach Anspruch 1, bei welcher:
die Basis einen Halteabschnitt für ein optisches Speichermedium aufweist, der ein optisches Speichermedium empfängt und hält; und
die Vertiefung der Basis lateral vom Halteabschnitt für das optische Speichermedium verschoben ist.

3. Optische Speichervorrichtung nach Anspruch 1 oder 2, ferner mit einem Deckel (40a) zum Abdecken der Vertiefung der Basis.

4. Optische Speichervorrichtung nach einem der Ansprüche 1 bis 3, bei welcher die Seitenwand eine zweite Öffnung darin aufweist, und der Lichtemitter (42) an der zweiten Öffnung montiert ist.

5. Optische Speichervorrichtung nach einem der Ansprüche 1 bis 4, bei welcher:
die Basis eine weitere Vertiefung, in der der Wagen (30) bewegbar ist, und eine innere Seitenwand aufweist; und
die innere Seitenwand die weitere Vertiefung definiert, und die weitere Vertiefung eine zweite Öffnung darin zum Einführen eines vom Lichtemitter (42) zum bewegbaren optischen Teil emittierten Strahls aufweist.

6. Optische Speichervorrichtung nach einem der Ansprüche 1 bis 5, bei welcher:
der Lichtemitter (42) einen Lichtstrahl dem fixierten optischen Teil durch eine erste Öffnung in einer zugeordneten Seitenwand zuführt, wobei der fixierte optische Teil (40) den Strahl durch eine zweite Öffnung in einer zugeordneten inneren Seitenwand zum bewegbaren optischen Teil, der am Wagen montiert ist, zum Scannen eines optischen Speichermediums mit dem Strahl aussendet, und ferner der fixierte optische Teil einen Lichtstrahl empfängt, der vom optischen Speichermedium durch die zweite Öffnung reflektiert wird, und den empfangenen reflektierten Strahl durch eine dritte Öffnung in einer zugeordneten Seitenwand, die die erste Vertiefung umgibt, aussendet;
der Photodetektor an der Basis benachbart der dritten Öffnung in der zugeordneten Seitenwand montiert ist und den vom fixierten optischen Teil (40) durch die dritte Öffnung ausgesendeten Strahl empfängt und detektiert.

7. Optische Speichervorrichtung nach einem der Ansprüche 1 bis 6, ferner mit einem Auswurfmotor (50), der an der Basis montiert ist, welcher Auswurfmotor (50) ein Motor vom Typ eines Flachgehäuses ist.

8. Optische Speichervorrichtung nach einem der Ansprüche 1 bis 7, bei welcher die Basis (20) ferner eine einheitliche und einteilige zweite Vertiefung umfaßt, und der Auswurfmotor (50) innerhalb der einheitlichen und einteiligen zweiten Vertiefung montiert ist.

9. Optische Speichervorrichtung nach Anspruch 8, bei welcher:
die Basis einen Mediumhalteabschnitt aufweist, der ein optisches Speichermedium empfängt und hält; und
die erste und zweite einheitliche und einteilige Vertiefung der Basis vom Mediumhalteabschnitt verschoben sind.

10. Optische Speichervorrichtung nach einem der Ansprüche 1 bis 9, bei welcher:
der Wagen an der Basis zur Bewegung entlang einer Suchrichtung montiert ist und den bewegbaren optischen Teil trägt,
der Lichtemitter einen Strahl in einer Richtung emittiert, die im wesentlichen rechtwinkelig zur Suchrichtung ist, und ferner umfaßt:
eine erste fixierte optische Komponente, die einen Strahl reflektiert, der vom Lichtemitter zum bewegbaren optischen Teil emittiert wird, und ferner einen Strahl reflektiert, der vom optischen Speichermedium reflektiert wird, in einer Richtung, die im wesentlichen rechtwinkelig zur Suchrichtung ist,
eine zweite fixierte optische Komponente, die den von der ersten fixierten optischen Komponente reflektierten Strahl empfängt und davon eine Datensignalkomponente und eine Servosignalkomponente trennt,
einen ersten Photodetektor (52), der die Datensignalkomponente empfängt und detektiert, und einen zweiten Photodetektor (53), der die Servosignalkomponente empfängt und detektiert;
wobei der erste und zweite Detektor an der Seitenwand der Basis montiert sind.

11. Optische Speichervorrichtung nach Anspruch 10, bei welcher:
die erste fixierte optische Komponente (44) ein Strahlreflektorprisma umfaßt; und
die zweite fixierte optische Komponente (45) einen Strahlteiler und ein Wollaston-Prisma umfaßt.

12. Optische Speichervorrichtung nach Anspruch 10 oder 11, ferner mit:
einer dritten fixierten optischen Komponente (48), die in der Vertiefung zwischen der zweiten fixierten optischen Komponente und dem zweiten Photodetektor (53) montiert ist, und einen Strahl von der zweiten fixierten optischen Komponente (45) empfängt und davon eine erste Servosignalkomponente und eine zweite Servosignalkomponente trennt und ausgibt.

13. Optische Speichervorrichtung nach einem der Ansprüche 10 bis 12, bei welcher der zweite Photodetektor (53) eine flache Fläche aufweist und ferner umfaßt:
ein erstes Detektorelement, das an der flachen Fläche montiert ist und die erste Servosignalkomponente detektiert; und
ein zweites Detektorelement, das an der flachen Fläche montiert ist und die zweite Servosignalkomponente detektiert.

14. Optische Speichervorrichtung nach einem der Ansprüche 1 bis 13,
bei welcher der fixierte optische Teil (40) eine Vielzahl von Komponenten umfaßt, die Basis (20) eine Vielzahl von Präzisionsflächen umfaßt, und jede Komponente, von den vielen Komponenten des fixierten optischen Teils, direkt mit einer jeweiligen Präzisionsfläche in Eingriff steht und dadurch optisch mit einer nächsten benachbarten Komponente ausgerichtet ist.

15. Optische Speichervorrichtung nach einem der Ansprüche 1 bis 14, bei welcher die Halteglieder eine Blattfeder (111) zum Drücken einer optischen Komponente des fixierten optischen Teils (20) an eine Wandfläche der Vertiefung enthalten, und die Blattfeder an einer Wand der Basis fixiert ist.

16. Optische Speichervorrichtung nach einem der Ansprüche 1 bis 15, bei welcher die optische Komponente eine optische Komponente (48) enthält, die in einem Spielraum zwischen Wandflächen der Basis (20) angeordnet ist.

## Revendications

1. Appareil de mémorisation optique qui reçoit et lit des données à partir d'un support de mémorisation optique, comprenant :
une tête optique comportant une partie optique fixe (40) et une partie optique mobile,
une base (20), un chariot (30) monté de façon mobile sur ladite base et portant ladite partie mobile,
un émetteur de lumière (42) monté sur ladite base,
**caractérisé en ce que**
ladite base (20) comporte dans celle-ci un évidement comprenant une partie de montage de composant optique solidaire et intégrée comportant une surface de montage de précision dans celle-ci en vue du montage sur celle-ci d'un composant optique de la partie optique fixe et une paroi latérale comportant une partie à un bord de ladite base, la paroi latérale définissant une limite dudit évidement et comportant dans celle-ci une ouverture,
un élément de maintien maintenant un composant correspondant de ladite partie optique fixe sur la surface de montage de précision, et
un photodétecteur monté sur ladite paroi latérale et un faisceau de lumière passant par ladite ouverture vers le photodétecteur.

2. Appareil de mémorisation optique selon la revendication 1, dans lequel
ladite base comporte une partie de maintien de support de mémorisation optique qui reçoit et maintient un support de mémorisation optique, et
l'évidement de ladite base est décalé latéralement par rapport à la partie de maintien de support optique.

3. Appareil de mémorisation optique selon la revendication 1 ou 2, comprenant en outre un couvercle (40a) recouvrant l'évidement de ladite base.

4. Appareil de mémorisation optique selon Tune quelconque des revendications 1 à 3, dans lequel la paroi latérale comporte une seconde ouverture dans celle-ci et ledit émetteur de lumière (42) est monté sur la seconde ouverture.

5. Appareil de mémorisation optique selon Tune quelconque des revendications 1 à 4, dans lequel :
ladite base comporte un autre évidement dans lequel ledit chariot (30) est mobile et une paroi latérale inteme, et
la paroi latérale interne définit l'autre évidement et l'autre évidement comporte une seconde ouverture dans celui-ci en vue d'introduire un faisceau émis depuis ledit émetteur de lumière (42) vers ladite partie optique mobile.

6. Appareil de mémorisation optique selon Tune quelconque des revendications 1 à 5, dans lequel :
ledit émetteur de lumière (42) fournit un faisceau de lumière à la partie optique fixe par l'intermédiaire dune première ouverture dans une dite paroi latérale associée, la partie optique fixe (40) transmettant le faisceau au travers dune seconde ouverture dans une paroi latérale intérieure associée vers la partie optique mobile monté sur ledit chariot en vue du balayage d'un support de mémorisation optique avec le faisceau et, en outre, la partie optique fixe recevant un faisceau de lumière réfléchi depuis le support de mémorisation optique par l'intermédiaire de la seconde ouverture et transmettant le faisceau réfléchi reçu par l'intermédiaire dune troisième ouverture dans une paroi latérale associée entourant le premier évidement,
ledit photodétecteur est monté sur ladite base de façon adjacente à la troisième ouverture dans la paroi latérale associée et reçoit et détecte le faisceau transmis depuis la partie optique fixe (40) par l'intermédiaire de la troisième ouverture.

7. Appareil de mémorisation optique selon Tune quelconque des revendications 1 à 6, comprenant en outre un moteur d'éjection (50) monté sur ladite base, ledit moteur d'éjection (50) étant un moteur du type à boîtier plat.

8. Appareil de mémorisation optique selon Tune quelconque des revendications 1 à 7, dans lequel ladite base (20) comprend en outre un second évidement solidaire et intégré et ledit moteur d'éjection (50) monté à l'intérieur du second évidement solidaire et intégré.

9. Appareil de mémorisation optique selon la revendication 8, dans lequel :
ladite base comporte une partie de maintien de support qui reçoit et maintient un support de mémorisation optique, et
les premier et second évidements solidaires et intégrés de ladite base sont décalés par rapport à la partie de maintien de support.

10. Appareil de mémorisation optique selon Tune quelconque des revendications 1 à 9, dans lequel :
ledit chariot est monté sur ladite base en vue d'un déplacement suivant une direction de recherche et porte ladite partie optique mobile,
ledit émetteur de lumière émet un faisceau dans une direction sensiblement perpendiculaire à la direction de recherche et comprend en outre
un premier composant optique fixe réfléchissant un faisceau émis depuis ledit émetteur de lumière vers ladite partie optique mobile et réfléchissant en outre un faisceau, réfléchi depuis le support de mémorisation optique, dans une direction sensiblement perpendiculaire à la direction de recherche,
un second composant optique fixe recevant le faisceau réfléchi depuis ledit premier composant optique fixe et séparant à partir de celui-ci une composante de signal de données et une composante de signal d'asservissement,
un premier photodétecteur (52) recevant et détectant la composante de signal de données, et un second photodétecteur (53) recevant et détectant la composante de signal d'asservissement,
les premier et second détecteurs montés sur la paroi latérale de base.

11. Appareil de mémorisation optique selon la revendication 10, dans lequel :
ledit premier composant optique fixe (44) comprend un prisme de réflexion de faisceau, et
ledit second composant optique fixe (45) comprend un séparateur de faisceau et un prisme de Wollaston.

12. Appareil de mémorisation optique selon Tune quelconque des revendications 10 ou 11, comprenant en outre
un troisième composant optique fixe (48) monté dans l'évidement entre ledit second composant optique fixe et ledit second photodétecteur (53) et recevant un faisceau dudit second composant optique fixe (45) et séparant à partir de celui-ci et fournissant en sortie une première composante de signal d'asservissement et une seconde composante de signal d'asservissement.

13. Appareil de mémorisation optique selon Tune quelconque des revendications 10 à 12, dans lequel ledit second photodétecteur (53) comporte une surface plane et comprend en outre
un premier élément de détecteur monté sur la surface plane et détectant la première composante de signal d'asservissement, et
un second élément de détecteur monté sur la surface plane et détectant la seconde composante de signal d'asservissement.

14. Appareil de mémorisation optique selon Tune quelconque des revendications 1 à 13,
dans lequel la partie optique fixe (40) comprend une pluralité de composants, la base (20) comprend plusieurs surfaces de précision, et chaque composant, parmi les plusieurs composants de la partie optique fixe, est directement en prise avec une surface de précision respective et est ainsi optiquement alignée avec un composant adjacent suivant.

15. Appareil de mémorisation optique selon Tune quelconque des revendications 1 à 14, dans lequel lesdits éléments de support comprennent un ressort à lames (111) destiné à presser un composant optique de la partie optique fixe (20) sur une surface de paroi de l'évidement et ledit ressort à lame est fixé à une paroi de la base.

16. Appareil de mémorisation optique selon Tune quelconque des revendications 1 à 15, dans lequel ledit composant optique comprend un composant optique (48) disposé dans un dégagement entre les surfaces des parois de la base (20).
